# EUROPEAN PATENT APPLICATION

(11) **EP 4 668 655 A1**
(43) Date of publication of application: **24.12.2025**
(21) Application number: 24757290.2
(22) Date of filing: 15.02.2024
(51) Int. Cl.: H04L 5/00, H04W 72/04, H04W 84/12, H04L 27/26

(54) **METHOD AND DEVICE FOR TRANSMITTING/RECEIVING PPDU IN WIRELESS LAN SYSTEM**

(30) Priority: 15.02.2023 KR 20230020252; 08.03.2023 KR 20230030803; 26.04.2023 KR 20230055049
(71) Applicant: LG Electronics Inc., Yeongdeungpo-gu Seoul 07336 (KR)
(72) Inventor: PARK, Eunsung, Seoul 06772 (KR); CHUN, Jinyoung, Seoul 06772 (KR); CHOI, Jinsoo, Seoul 06772 (KR); LIM, Dongguk, Seoul 06772 (KR); CHO, Hangyu, Seoul 06772 (KR)
(74) Representative: Mooser, Sebastian Thomas
(86) International application number: PCT/KR2024/095244
(87) International publication number: WO 2024/172571

(57) **Abstract**

A method and a device for transmitting and receiving a PPDU in a wireless LAN system are disclosed. The method performed by means of a first STA, according to one embodiment of the disclosure, may comprise the steps of: generating a physical protocol data unit (PPDU) to be transmitted within a 80MHz frequency bandwidth; and transmitting the PPDU to a second STA.

## Description

### [Technical Field]

The present disclosure relates to a method and an apparatus for transmitting and receiving a physical protocol data unit (PPDU) in a wireless local area network (WLAN) system.

### [Background Art]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

### [Disclosure]

### [Technical Problem]

A technical object of the present disclosure is to provide a method and an apparatus of transmitting and receiving a PPDU including a resource unit (RU) comprising discontiguous subcarriers.

The technical objects to be achieved by the present disclosure are not limited to the above-described technical objects, and other technical objects which are not described herein will be clearly understood by those skilled in the pertinent art from the following description.

### [Technical Solution]

A method performed by a first station (STA) in a wireless local area network (WLAN) system according to an aspect of the present disclosure may include: generating a PPDU (physical protocol data unit) to be transmitted within a 80MHz frequency bandwidth; and transmitting the PPDU to a second STA. A plurality of first type resource units (RUs) within the 80MHz frequency bandwidth may comprise subcarriers excluding one or more DC subcarriers, one or more guard subcarriers, and/or one or more null subcarriers, each of the plurality of first type RUs may comprise discontiguous subcarriers at a predetermined interval in a frequency domain, a location for one or more first type RUs of the PPDU may be indicated by an RU allocation subfield in an ascending order of the plurality of first type RUs based on a lowest subcarrier of each of the plurality of first type RUs in a frequency domain.

A method performed by a second station (STA) in a wireless local area network (WLAN) system according to an additional aspect of the present disclosure may include: receiving a PPDU (physical protocol data unit) within a 80MHz frequency bandwidth; and processing the PPDU. A plurality of first type resource units (RUs) within the 80MHz frequency bandwidth may comprise subcarriers excluding one or more DC subcarriers, one or more guard subcarriers, and/or one or more null subcarriers, each of the plurality of first type RUs may comprise discontiguous subcarriers at a predetermined interval in a frequency domain, a location for one or more first type RUs of the PPDU is indicated by an RU allocation subfield in an ascending order of the plurality of first type RUs based on a lowest subcarrier of each of the plurality of first type RUs in a frequency domain.

### [Technical Effects]

According to an embodiment of the present disclosure, transmission power can be improved by using RUs comprising discontiguous subcarriers, thereby increasing transmission throughput and improving coverage.

In addition, according to an embodiment of the present disclosure, signaling overhead for allocation of RUs comprising discontiguous subcarriers can be reduced.

Effects achievable by the present disclosure are not limited to the above-described effects, and other effects which are not described herein may be clearly understood by those skilled in the pertinent art from the following description.

### [Brief Description of the Drawings]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIG. 8 is a diagram illustrating an exemplary format of a trigger frame to which the present disclosure can be applied.
FIG. 9 is a diagram illustrating an exemplary arrangement of resource units (RUs) used on a 20 MHz band.
FIG. 10 is a diagram illustrating an exemplary arrangement of resource units (RUs) used on a 40 MHz band.
FIG. 11 is a diagram illustrating an exemplary arrangement of resource units (RUs) used on an 80 MHz band.
FIG. 12 illustrates application of distributed-tone RUs in a wireless LAN system to which the present disclosure can be applied.
FIG. 13 illustrates an operation of a transmitting device for a PPDU transmission/reception method according to an embodiment of the present disclosure.
FIG. 14 illustrates an operation of a receiving device for a PPDU transmission/reception method according to an embodiment of the present disclosure.

### [Detailed Description]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

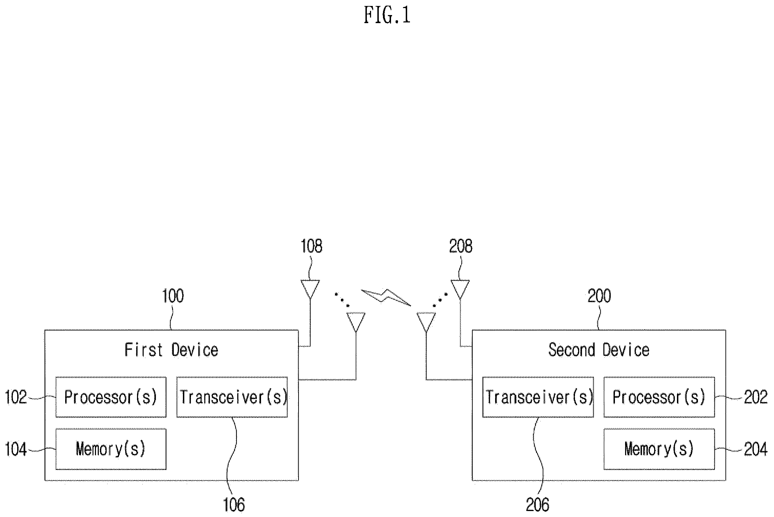

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

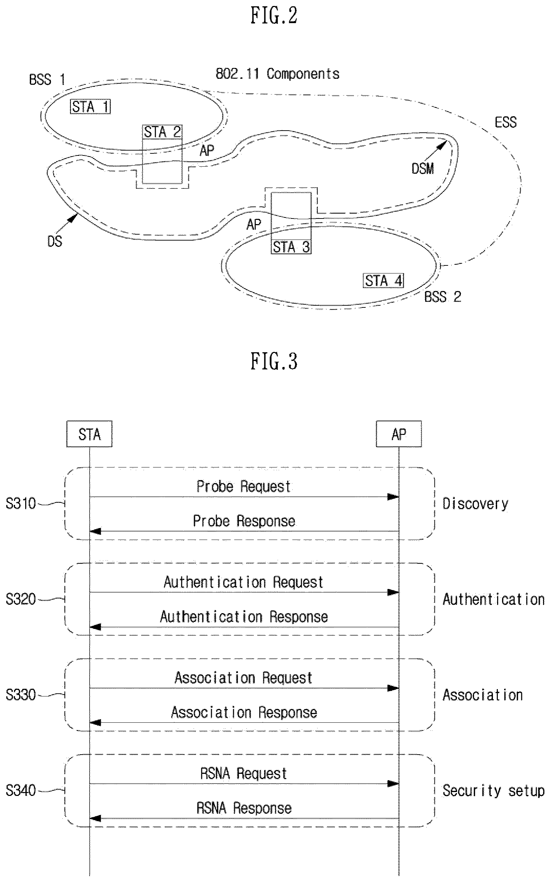

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

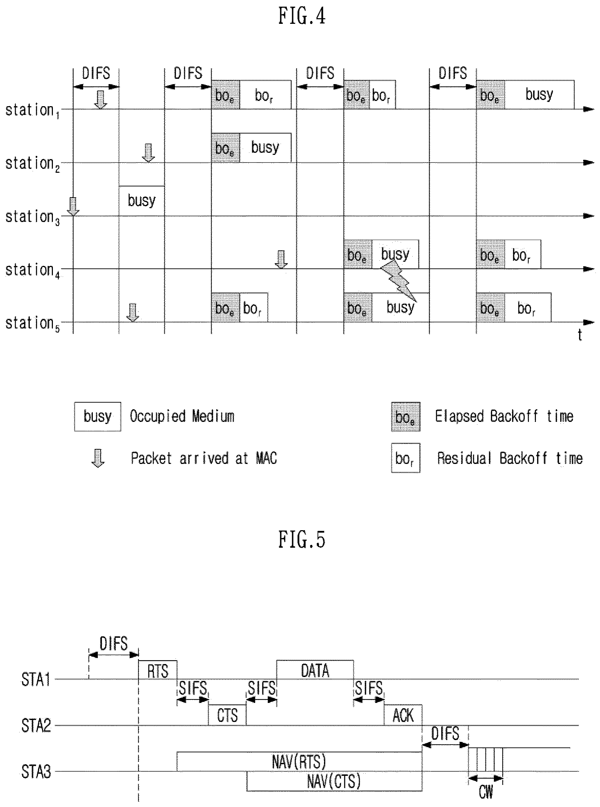

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a reassociation request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

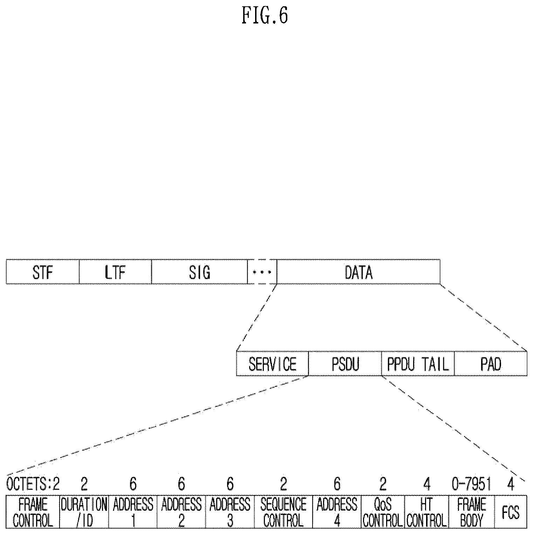

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

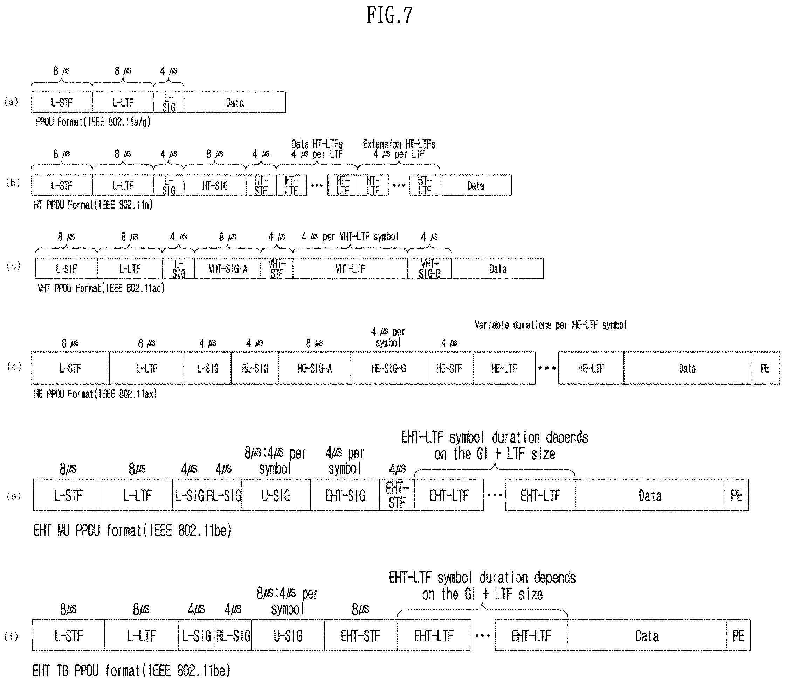

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

### Trigger frame

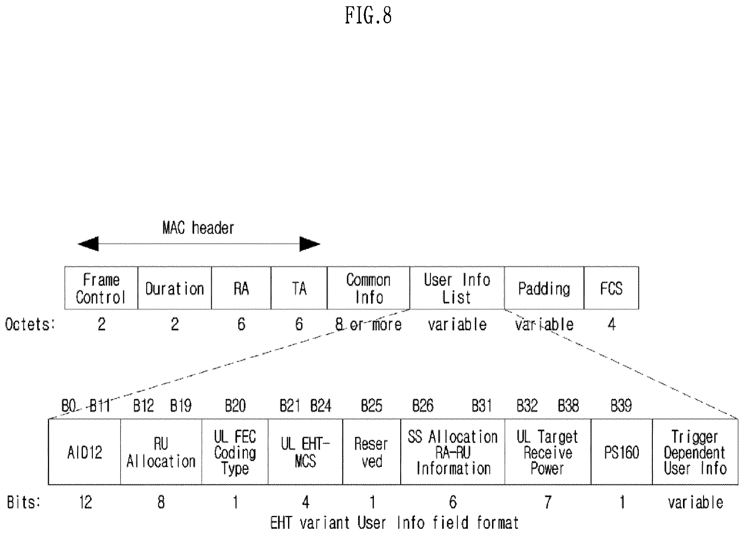

FIG. 8 is a diagram illustrating an exemplary format of a trigger frame to which the present disclosure can be applied.

A trigger frame may allocate resources for one or more TB PPDU transmissions and request TB PPDU transmissions. The trigger frame may also include other information required by an STA transmitting a TB PPDU in response thereto. The trigger frame may include common info and user info list fields in the frame body.

The common info field may include information that is commonly applied to one or more TB PPDU transmissions requested by the trigger frame, such as a trigger type, UL length, whether a subsequent trigger frame exists (e.g., More TF), whether CS (channel sensing) is required, UL BW (bandwidth), etc.

The user info list includess zero or more user info fields. FIG. 8 exemplarily illustrates an EHT variant user info field format.

The AID12 subfield basically indicates that it is a user information field for an STA having the corresponding AID. In addition, if the AID12 field has a predetermined specific value, it may be utilized for other purposes, such as allocating a random access (RA)-RU, or being configured in the form of a special user info field. The special user info field is a user information field that does not include user specific information but includes extended common information that is not provided in the common information field. For example, the special user info field can be identified by the AID12 value of 2007, and the special user info field flag subfield in the common information field can indicate whether the special user info field is included.

The RU allocation subfield can indicate the size and position of RU/MRU. For this purpose, the RU allocation subfield can be interpreted together with the PS160 (primary/secondary 160MHz) subfield of the user information field, the UL BW subfield of the common information field, etc. For example, the mapping of B7-B1 of the RU allocation subfield can be defined together with the settings of B0 of the RU allocation subfield and the PS160 subfield of as shown in Table 1 below. Table 1 shows an example of encoding of the PS160 subfield and the RU allocation subfield of the EHT variant user information field.

**[Table 1]**

| **PS160 subfield** | **B0 of the RU Allocation subfield** | **B7-B1 of the RU Allocation subfield** | **Bandwidth (MHz)** | **RU or MRU size** | **RU or MRU index** | **PHY RU or MRU index** |
|---|---|---|---|---|---|---|
| 0-3: | | 0-8 | 20, 40, 80, 160, or 320 | 26 | RU1 to RU9, respectively | 37×*N*+ RU index |
| 80 MHz frequency subblock where the RU is located (See NOTE 1) | | | | | | |
| | | 9-17 | 40, 80, 160, or 320 | | RU10 to RU18, respectively | |
| | | 18 | 80, 160, or 320 | | Reserved | |
| | | 19-36 | 80, 160, or 320 | | RU20 to RU37 respectively | |
| | | 37-40 | 20, 40, 80, 160, or 320 | 52 | RU1 to RU4, respectively | 16×*N*+ RU index |
| | | 41-44 | 40, 80, 160, or 320 | | RU5 to RU8, respectively | |
| | | 45-52 | 80, 160, or 320 | | RU9 to RU16, respectively | |
| | | 53, 54 | 20, 40, 80, 160, or 320 | 106 | RU1 and RU2, respectively | 8×*N*+ RU index |
| | | 55, 56 | 40, 80, 160, or 320 | | RU3 and RU4, respectively | |
| | | 57-60 | 80, 160, or 320 | | RU5 to RU8, respectively | |
| | | 61 | 20, 40, 80, 160, or 320 | 242 | RU1 | 4×*N*+ RU index |
| | | 62 | 40, 80, 160, or 320 | | RU2 | |
| | | 63, 64 | 80, 160, or 320 | | RU3 and RU4, respectively | |
| | | 65 | 40, 80, 160, or 320 | 484 | RU1 | 2×*N*+ RU index |
| | | 66 | 80, 160, or 320 | | RU2 | |
| | | 67 | 80, 160, or 320 | 996 | RU1 | N+ RU index |
| 0-1: | 0 | 68 | 20, 40, 80, 160, or 320 | Reserved | Reserved | Reserved |
| 160 MHz segment where the RU is located (See NOTE 3) | | | | | | |
| | 1 | | 160 or 320 | 2×996 | RU1 | X1 + RU index |
| 0 | 0 | 69 | 20, 40, 80, 160, or 320 | Reserved | Reserved | Reserved |
| 0 | 1 | | | | | |
| 1 | 0 | | | | | |
| 1 | 1 | | 320 | 4×996 | RU1 | RUI |
| 0-3: | | 70 | 20, 40 | 52+26 | MRU1 | |
| 80 MHz frequency subblock where the MRU is located (See NOTE 1) | | | 80, 160, or 320 | Reserved | Reserved | |
| | | 71-72 | 20, 40, 80, 160, or 320 | 52+26 | MRU2 and MRU3, respectively | |
| | | 73-74 | 40, 80, 160, or 320 | 52+26 | MRU4 and MRU5, respectively | |
| | | 75 | 40 | 52+26 | MRU6 | 12×*N*+ MRU index |
| | | | 80, 160, or 320 | Reserved | Reserved | |
| | | 76 | 20, 40, 80, 160, or 320 | Reserved | Reserved | |
| | | 77-80 | 80, 160, or 320 | 52+26 | MRU8 to MRU11, respectively | |
| | | 81 | 20, 40, 80, 160, or 320 | Reserved | Reserved | |
| | | 82 | 20, 40, 80, 160, or 320 | 106+26 | MRU1 | |
| | | 83 | 20, 40 | 106+26 | MRU2 | |
| | | | 80, 160, or 320 | Reserved | Reserved | |
| | | 84 | 40 | 106+26 | MRU3 | |
| | | | 80, 160, or 320 | Reserved | Reserved | 8×*N*+ MRU index |
| | | 85 | 40, 80, 160, or 320 | 106+26 | MRU4 | |
| | | 86 | 80, 160, or 320 | 106+26 | MRU5 | |
| | | 87-88 | 20, 40, 80, 160, or 320 | Reserved | Reserved | |
| | | 89 | 80, 160, or 320 | 106+26 | MRU8 | |
| | | 90-93 | 80, 160, or 320 | 484+242 | MRU1 to MRU4, respectively | 4×*N*+ MRU index |
| 0-1: | 0 | 94, 95 | 160 or 320 | 996+484 | MRU1 and MRU2, respectively | 4×X1 + MRU index |
| 160 MHz segment where the MRU is located (See NOTE 3) | | | | | | |
| | 1 | | | | MRU3 and MRU4, respectively | |
| 0: MRU is located in the primary 160 MHz | 0 | 96-99 | 160 | 996+484+ 242 | MRU1 to MRU4, respectively | MRU index |
| | 1 | | | | MRU5 to MRU8, respectively | |
| 1 | Any | | 20, 40, 80, 160, or 320 | Reserved | Reserved | Reserved |
| 0 | 0 | 100-103 | 320 | 2×996 +484 | MRU1 to MRU4, respectively | MRU index |
| 0 | 1 | 100-101 | | | MRU5 and MRU6, respectively | |
| 0 | 1 | 102-103 | 20, 40, 80, 160, or 320 | Reserved | Reserved | |
| 1 | 0 | 100-101 | 20, 40, 80, 160, or 320 | Reserved | Reserved | |
| 1 | 0 | 102-103 | 320 | 2×996 +484 | MRU7 and MRU8, respectively | |
| 1 | 1 | 100-103 | | | MRU9 to MRU12, respectively | |
| 0 | 0 | 104 | 320 | 3×996 | MRU1 | MRU index |
| 0 | 1 | | | | MRU2 | |
| 1 | 0 | | | | MRU3 | |
| 1 | 1 | | | | MRU4 | |

| **PS160 subfield** | **B0 of the RU Allocation subfield** | **B7-B1 of the RU Allocation subfield** | **Bandwidth (MHz)** | **RU or MRU size** | **RU or MRU index** | **PHY RU or MRU index** |
|---|---|---|---|---|---|---|
| 0 | 0 | 105, 106 | 320 | 3×996 +484 | MRU1 and MRU2, respectively | MRU index |
| 0 | 1 | | | | MRU3 and MRU4, respectively | |
| 1 | 0 | | | | MRU5 and MRU6, respectively | |
| 1 | 1 | | | | MRU7 and MRU8, respectively | |
| Any | Any | 107-127 | 20, 40, 80, 160, or 320 | Reserved | Reserved | Reserved |

If the PS160 subfield is 0 and the RU/MRU size is 996 tones or less, setting B0 of the RU allocation subfield to 0 may indicate that the RU/MRU allocation is applied to the primary 80 MHz channel, and setting its value to 1 may indicate that the RU allocation is applied to the secondary 80 MHz channel of the primary 160 MHz. On the other hand, if the PS160 subfield is 1 and the RU/MRU size is 996 tones or less, setting B0 of the RU allocation subfield to 0 may indicate that the RU/MRU allocation is applied to the lower 80 MHz of the secondary 160 MHz, and setting its value to 1 may indicate that the RU allocation is applied to the upper 80 MHz of the secondary 160 MHz.

In the trigger frame RU allocation table of Table 1, the parameter N can be calculated based on the formula of N=2*X1+X0. For a bandwidth of 80 MHz or less, the values of PS160, B0, X0, and X1 can be set to 0. For a bandwidth of 160 MHz and a bandwidth of 320 MHz, the values of PS160, B0, X0, and X1 can be set as shown in Table 2. These settings represent the absolute frequency order for the primary and secondary 80 MHz and 160 MHz channels. The order from left to right represents the order from low frequency to high frequency. The primary 80 MHz channel is represented as P80, the secondary 80 MHz channel is represented as S80, and the secondary 160 MHz channel is represented as S160.

**[Table 2]**

| **Bandwidth (MHz)** | **Inputs** | | | **Outputs** | | |
|---|---|---|---|---|---|---|
| | **Configuration** | **PS160** | **B0** | **X0** | **X1** | **N** |
| 20/40/80 | [P80] | 0 | 0 | 0 | 0 | 0 |
| 160 | [P80 S80] | 0 | 0 | 0 | 0 | 0 |
| | | 0 | 1 | 1 | 0 | 1 |
| | [S80 P80] | 0 | 0 | 1 | 0 | 1 |
| | | 0 | 1 | 0 | 0 | 0 |
| | [P80 S80 S160] | 0 | 0 | 0 | 0 | 0 |
| | | 0 | 1 | 1 | 0 | 1 |
| | | 1 | 0 | 0 | 1 | 2 |
| | | 1 | 1 | 1 | 1 | 3 |
| | [S80 P80 S160] | 0 | 0 | 1 | 0 | 1 |
| | | 0 | 1 | 0 | 0 | 0 |
| | | 1 | 0 | 0 | 1 | 2 |
| 320 | | 1 | 1 | 1 | 1 | 3 |
| | [S160 P80 S80] | 0 | 0 | 0 | 1 | 2 |
| | | 0 | 1 | 1 | 1 | 3 |
| | | 1 | 0 | 0 | 0 | 0 |
| | | 1 | 1 | 1 | 0 | 1 |
| | [S160 S80 P80] | 0 | 0 | 1 | 1 | 3 |
| | | 0 | 1 | 0 | 1 | 2 |
| | | 1 | 0 | 0 | 0 | 0 |
| | | 1 | 1 | 1 | 0 | 1 |

### Resource Unit (RU) and Resource Allocation

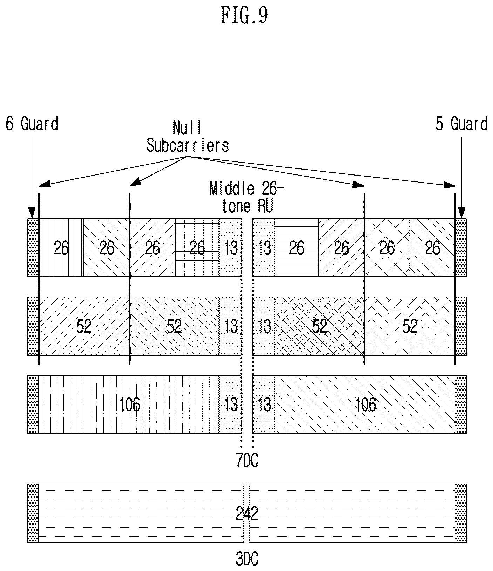

FIGS. 9 to 11 are diagrams for explaining examples of resource units of a wireless LAN system to which the present disclosure can be applied.

Referring to FIGS. 9 to 11, a resource unit (RU) defined in a wireless LAN system is described. An RU may include multiple subcarriers (or tones). An RU may be used when transmitting a signal to multiple STAs based on an OFDMA technique. An RU may also be defined when transmitting a signal to one STA. An RU may be used for an STF, LTF, data field, etc. of a PPDU.

As illustrated in FIGS. 9 to 11, RUs corresponding to different numbers of tones (i.e., subcarriers) may be used to configure some fields of a 20 MHz, 40 MHz, or 80 MHz X-PPDU (X represents HE, EHT, etc.). For example, resources may be allocated in units of RUs illustrated for X-STF, X-LTF, and Data fields.

FIG. 9 is a diagram illustrating an exemplary arrangement of resource units (RUs) used on a 20 MHz band.

As shown in the top of FIG. 9, 26 units (i.e., units corresponding to 26 tones) may be allocated. Six tones may be used as a guard band in the leftmost band of the 20 MHz band, and five tones may be used as a guard band in the rightmost band of the 20 MHz band. In addition, seven DC tones may be inserted in the center band, i.e., the DC band, and 26 units corresponding to 13 tones may exist on the left and right sides of the DC band, respectively. In addition, 26 units, 52 units, and 106 units may be allocated to other bands. Each unit may be allocated for an STA or a user.

The RU layout of FIG. 9 is utilized not only in a situation for multiple users (MUs) but also in a situation for a single user (SU), in which case it is possible to use one 242-unit as illustrated at the bottom of FIG. 9. In this case, three DC tones can be inserted.

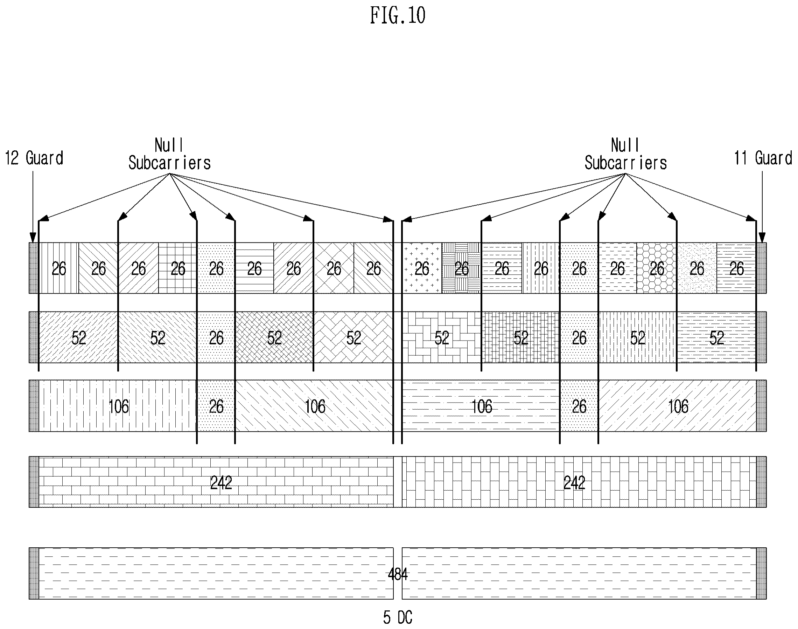

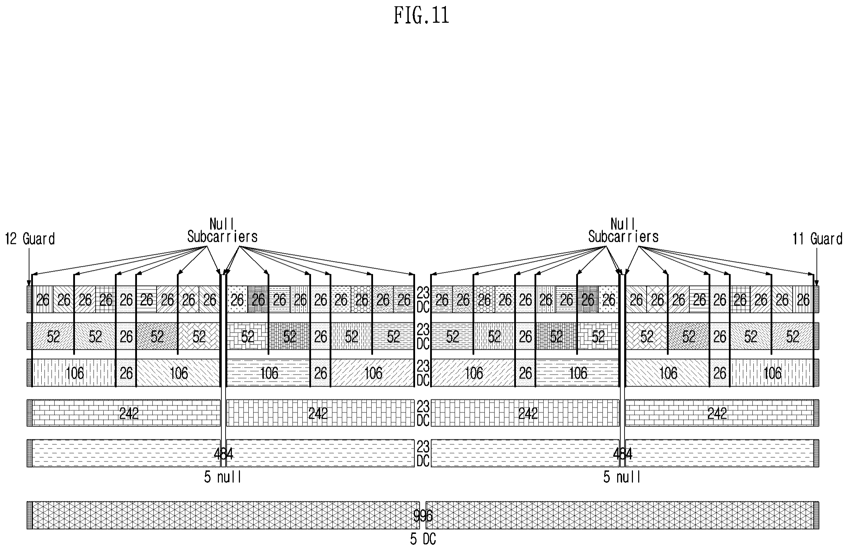

In the example of FIG. 9, various sizes of RUs, i.e., 26-RU, 52-RU, 106-RU, 242-RU, etc. are illustrated, but the specific sizes of these RUs can be reduced or expanded. Accordingly, the specific sizes of each RU (i.e., the number of corresponding tones) in the present disclosure are not limited and are exemplary. In addition, within a given bandwidth (e.g., 20, 40, 80, 160, 320 MHz, ...) in the present disclosure, the number of RUs can vary depending on the RU size. The example of FIG. 10 and/or FIG. 11 described below is the same as the example of FIG. 9 in that the size and/or number of RUs can be changed.

FIG. 10 is a diagram illustrating an exemplary arrangement of resource units (RUs) used on a 40 MHz band.

As in the example of FIG. 9, where RUs of various sizes were used, the example of FIG. 10 may also use 26-RU, 52-RU, 106-RU, 242-RU, 484-RU, etc. In addition, 5 DC tones may be inserted at the center frequency, 12 tones may be used as a guard band in the leftmost band of the 40MHz band, and 11 tones may be used as a guard band in the rightmost band of the 40MHz band.

In addition, as illustrated, 484-RU may be used when used for a single user.

FIG. 11 is a diagram illustrating an exemplary arrangement of resource units (RUs) used on an 80 MHz band.

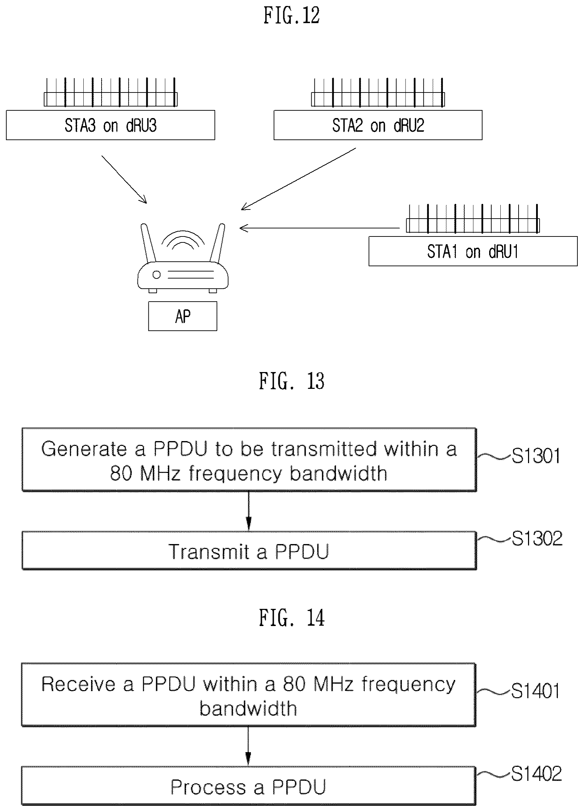

As in the examples of FIGS. 9 and 10 where RUs of various sizes were used, the example of FIG. 11 may also use 26-RU, 52-RU, 106-RU, 242-RU, 484-RU, 996-RU, etc. In addition, in the case of 80MHz PPDU, the RU layout of HE PPDU and EHT PPDU may be different, and the example of FIG. 11 shows an example of the RU layout for 80MHz EHT PPDU. In the example of FIG. 11, 12 tones are used as a guard band in the leftmost band of the 80MHz band, and 11 tones are used as a guard band in the rightmost band of the 80MHz band, which is the same for HE PPDU and EHT PPDU. Unlike HE PPDU where seven DC tones are inserted in the DC band and there is one 26-RU corresponding to 13 tones each on the left and right of the DC band, EHT PPDU has 23 DC tones inserted in the DC band and there is one 26-RU each on the left and right of the DC band. Unlike HE PPDU where there is one null subcarrier between 242-RUs other than the center band, EHT PPDU has five null subcarriers. In HE PPDU, one 484-RU does not include any null subcarriers, but in EHT PPDU, one 484-RU contains five null subcarriers.

In addition, as illustrated, when used for a single user, 996-RU can be used, in which case the insertion of 5 DC tones is common in both HE PPDU and EHT PPDU.

An EHT PPDU of 160 MHz or more may be configured with multiple 80 MHz subblocks of FIG. 11. The RU layout for each 80 MHz subblock may be the same as the RU layout of the 80 MHz EHT PPDU of FIG. 11. If an 80 MHz subblock of a 160 MHz or 320 MHz EHT PPDU is not punctured and the entire 80 MHz subblock is used as part of an RU or MRU (Multiple RU), the 80 MHz subblock may use 996-RU of FIG. 11.

Here, the MRU corresponds to a group of subcarriers (or tones) composed of multiple RUs, and the multiple RUs constituting the MRU may be RUs of the same size or of different sizes. For example, a single MRU may be defined as 52+26-tones, 106+26-tones, 484+242-tones, 996+484-tones, 996+484+242-tones, 2×996+484-tones, 3×996-tones, or 3×996+484-tones. Here, the multiple RUs constituting one MRU may correspond to RUs of small size (e.g., 26, 52, 106) or RUs of large size (e.g., 242, 484, 996, etc.). That is, a single MRU including a small size RU and a large size RU may not be configured/defined. In addition, multiple RUs composing a single MRU may or may not be consecutive in the frequency domain.

If an 80MHz subblock includes RUs smaller than 996 tones, or locations of the 80MHz subblock are punctured, the 80MHz subblock may use RU placements excluding 996-tone RUs.

The locations of the RUs may be fixed as defined in Tables 3 to 7 below, depending on the bandwidth of each PPDU.

Table 3 illustrates the indices of RUs in a 20MHz PPDU and the data and pilot subcarrier indices (ranges) for each RU.

**[Table 3]**

| **RU type** | **RU index and subcarrier range** | | | | |
|---|---|---|---|---|---|
| 26-tone RU | RU 1 [-121:-96] | RU 2 [-95: -70] | RU 3 [-68: -43] | RU 4 [-42: -17] | RU 5 [-16: -4, 4: 16] |
| | RU 6 [17: 42] | RU 7 [43: 68] | RU 8 [70: 95] | RU 9 [96: 121] | |
| 52-tone RU | RU 1 [-121: -70] | RU 2 [-68: -17] | RU 3 [17: 68] | RU 4 [70: 121] | |
| 106-tone RU | RU 1 [-122: -17] | | RU 2 [17: 122] | | |
| 242-tone RU | RU 1 [-122: -2, 2:122] | | | | |

Table 4 illustrates the indices of RUs within a 40MHz PPDU and the data and pilot subcarrier indices (ranges) for each RU.

**[Table 4]**

| **RU type** | **RU index and subcarrier range** | | | | |
|---|---|---|---|---|---|
| 26-tone RU | RU 1 [-243: -218] | RU 2 [-217: -192] | RU 3 [-189: -164] | RU 4 [-163: -138] | RU 5 [-136: -111] |
| | RU 6 [-109: -84] | RU 7 [-83: -58] | RU 8 [-55: -30] | RU 9 [-29: -4] | |
| | RU 10 [4: 29] | RU 11 [30: 55] | RU 12 [58: 83] | RU 13 [84: 109] | RU 14 [111: 136] |
| | RU 15 [138: 163] | RU 16 [164: 189] | RU 17 [192: 217] | RU18 [218: 243] | |
| 52-tone RU | RU 1 [-243: -192] | RU 2 [-189: -138] | RU 3 [-109: -58] | RU 4 [-55: -4] | |
| | RU 5 [4: 55] | RU 6 [58: 109] | RU 7 [138: 189] | RU 8 [192: 243] | |
| 106-tone RU | RU 1 [-243: -138] | RU 2 [-109: -4] | RU 3 [4: 109] | RU 4 [138: 243] | |
| 242-tone RU | RU 1 [-244: -3] | | RU 2 [3: 244] | | |
| 484-tone RU | RU 1 [-244: -3, 3: 244] | | | | |

Table 5 illustrates the indices of RUs within an 80MHz PPDU and the data and pilot subcarrier indices (ranges) for each RU.

**[Table 5]**

| **RU type** | **RU index and subcarrier range** | | | | |
|---|---|---|---|---|---|
| 26-tone RU | RU 1 [-499: -474] | RU 2 [-473: -448] | RU 3 [-445: -420] | RU 4 [-419: -394] | RU 5 [-392: -367] |
| | RU 6 [-365: -340] | RU 7 [-339:-314] | RU 8 [-311: -286] | RU 9 [-285: -260] | |
| | RU 10 [-252: -227] | RU 11 [-226: -201] | RU 12 [-198: -173] | RU 13 [-172:--147] | RU 14 [-145: -120] |
| | RU 15 [-118: -93] | RU 16 [-92: -67] | RU 17 [-64: -39] | RU 18 [-38: -13] | RU 19 [not defined] |
| | RU 20 [13: 38] | RU 21 [39: 64] | RU 22 [67: 92] | RU 23 [93: 118] | RU 24 [120: 145] |
| | RU 25 [147: 172] | RU 26 [173: 198] | RU 27 [201: 226] | RU 28 [227: 252] | |
| | RU 29 [260: 285] | RU 30 [286: 311] | RU 31 [314: 339] | RU 32 [340: 365] | RU 33 [367: 392] |
| | RU 34 [394: 419] | RU 35 [420: 445] | RU 36 [448: 473] | RU 37 [474: 499] | |
| 52-tone RU | RU 1 [-499: -448] | RU 2 [-445: -394] | RU 3 [-365: -314] | RU 4 [-311: -260] | |
| | RU 5 [-252: -201] | RU 6 [-198: -147] | RU 7 [-118: -67] | RU 8 [-64: -13] | |
| | RU 9 [13: 64] | RU 10 [67: 118] | RU 11 [147: 198] | RU 12 [201: 252] | |
| | RU 13 [260: 311] | RU 14 [314: 365] | RU 15 [394: 445] | RU 16 [448: 499] | |
| 106-tone RU | RU 1 [-499: -394] | RU 2 [-365:-260] | RU 3 [-252:-147] | RU 4 [-118: -13] | |
| | RU 5 [13: 118] | RU 6 [147: 252] | RU 7 [260: 365] | RU 8 [394: 499] | |
| 242-tone RU | RU 1 [-500: -259] | RU 2 [-253: -12] | RU 3 [12: 253] | RU 4 [259: 500] | |
| 484-tone RU | RU 1 [-500: -259, -253: -12] | RU 2 [12: 253, 259: 500] | | | |
| 996-tone RU | RU 1 [-500: -3, 3: 500] | | | | |

Table 6 illustrates the indices of RUs within a 160MHz PPDU and the data and pilot subcarrier indices (ranges) for each RU.

**[Table 6]**

| **RU type** | **RU index and subcarrier range** | | | | |
|---|---|---|---|---|---|
| 26-tone RU | RU 1 [-1011: -986] | RU 2 [-985: -960] | RU 3 [-957: -932] | RU 4 [-931: -906] | RU 5 [-904: -879] |
| | RU 6 [-877: -852] | RU 7 [-851: -826] | RU 8 [-823: -798] | RU 9 [-797: -772] | |
| | RU 10 [-764: -739] | RU 11 [-738: -713] | RU 12 [-710: -685] | RU 13 [-684: -659] | RU 14 [-657: -632] |
| | RU 15 [-630: -605] | RU 16 [-604: -579] | RU 17 [-576: -551] | RU 18 [-550: -525] | RU 19 [not defined] |
| | RU 20 [-499: -474] | RU 21 [-473: -448] | RU 22 [-445: -420] | RU 23 [-419: -394] | RU 24 [-392: -367] |
| | RU 25 [-365: -340] | RU 26 [-339: -314] | RU 27 [-311: -286] | RU 28 [-285: -260] | |
| | RU 29 [-252: -227] | RU 30 [-226: -201] | RU 31 [-198: -173] | RU 32 [-172: -147] | RU 33 [-145: -120] |
| | RU 34 [-118: -93] | RU 35 [-92: -67] | RU 36 [-64: -39] | RU 37 [-38: -13] | |
| | RU 38 [13: 38] | RU 39 [39: 64] | RU 40 [67: 92] | RU 41 [93: 118] | RU 42 [120: 145] |
| | RU 43 [147: 172] | RU 44 [173: 198] | RU 45 [201: 226] | RU 46 [227: 252] | |
| | RU 47 [260: 285] | RU 48 [286: 311] | RU 49 [314: 339] | RU 50 [340: 365] | RU 51 [367: 392] |
| | RU 52 [394: 419] | RU 53 [420: 445] | RU 54 [448: 473] | RU 55 [474: 499] | RU 56 [not defined] |
| | RU 57 [525: 550] | RU 58 [551: 576] | RU 59 [579: 604] | RU 60 [605: 630] | RU 61 [632: 657] |
| | RU 62 [659: 684] | RU 63 [685: 710] | RU 64 [713: 738] | RU 65 [739: 764] | |
| | RU 66 [772: 797] | RU 67 [798: 823] | RU 68 [826: 851] | RU 69 [852: 877] | RU 70 [879: 904] |
| | RU 71 [906: 931] | RU 72 [932: 957] | RU 73 [960: 985] | RU 74 [986: 1011] | |
| 52-tone RU | RU 1 [-1011: -960] | RU 2 [-957: -906] | RU 3 [-877: -826] | RU 4 [-823: -772] | |
| | RU 5 [-764: -713] | RU 6 [-710: -659] | RU 7 [-630: -579] | RU 8 [-576: -525] | |
| | RU 9 [-499: -448] | RU 10 [-445: -394] | RU 11 [-365: -314] | RU 12 [-311: -260] | |
| | RU 13 [-252: -201] | RU 14 [-198: -147] | RU 15 [-118: -67] | RU 16 [-64: -13] | |
| | RU 17 [13: 64] | RU 18 [67: 118] | RU 19 [147: 198] | RU 20 [201: 252] | |
| | RU 21 [260: 311] | RU 22 [314: 365] | RU 23 [394: 445] | RU 24 [448: 499] | |
| | RU 25 [525: 576] | RU 26 [579: 630] | RU 27 [659: 710] | RU 28 [713: 764] | |
| | RU 29 [772: 823] | RU 30 [826: 877] | RU 31 [906: 957] | RU 32 [960: 1011] | |
| 106-tone RU | RU 1 [-1011: -906] | RU 2 [-877: -772] | RU 3 [-764: -659] | RU 4 [-630: -525] | |
| | RU 5 [-499: -394] | RU 6 [-365: -260] | RU 7 [-252: -147] | RU 8 [-118: -13] | |
| | RU 9 [13: 118] | RU 10 [147: 252] | RU 11 [260: 365] | RU 12 [394: 499] | |
| | RU 13 [525: 630] | RU 14 [659: 764] | RU 15 [772: 877] | RU 16 [906: 1011] | |
| 242-tone RU | RU 1 [-1012: -771] | RU 2 [-765: -524] | RU 3 [-500: -259] | RU 4 [-253: -12] | |
| | RU 5 [12: 253] | RU 6 [259: 500] | RU 7 [524: 765] | RU 8 [771: 1012] | |
| 484-tone RU | RU 1 [-1012: -771, -765: -524] | RU 2 [-500: -259, -253: -12] | RU 3 [12: 253, 259: 500] | RU 4 [524: 765, 771: 1012] | |
| 996-tone RU | RU 1 [-1012: -515, -509: -12] | RU 2 [12: 509, 515: 1012] | | | |
| 2×996-tone RU | RU 1 [-1012: -515, -509: -12, 12: 509, 515: 1012] | | | | |

Table 7 illustrates the indices of RUs within a 320MHz PPDU and the data and pilot subcarrier indices (ranges) for each RU.

**[Table 7]**

| **RU type** | **RU index and subcarrier range** | | | | |
|---|---|---|---|---|---|
| 26-tone RU | RU 1 [-2035: -2010] | RU 2 [-2009: -1984] | RU 3 [-1981: --1956] | RU 4 [-1955: -1930] | RU 5 [-1928: --1903] |
| | RU 6 [-1901:-1876] | RU 7 [-1875:-1850] | RU 8 [-1847:-1822] | RU 9 [-1821:-1796] | |
| | RU 10 [-1788: -1763] | RU 11 [-1762: -1737] | RU 12 [-1734: -1709] | RU 13 [-1708:-1683] | RU 14 [-1681: -1656] |
| | RU 15 [-1654: -1629] | RU 16 [-1628: -1603] | RU 17 [-1600: --1575] | RU 18 [-1574: -1549] | RU 19 [not defined] |
| | RU 20 [-1523: -1498] | RU 21 [-1497: -1472] | RU 22 [-1469: -1444] | RU 23 [-1443: -1418] | RU 24 [-1416: -1391] |
| | RU 25 [-1389:-1364] | RU 26 [-1363: -1338] | RU 27 [-1335:-1310] | RU 28 [-1309: -1284] | |
| | RU 29 [-1276: -1251] | RU 30 [-1250: -1225] | RU 31 [-1222: --1197] | RU 32 [-1196: -1171] | RU 33 [-1169: -1144] |
| | RU 34 [-1142: -1117] | RU 35 [-1116: -1091] | RU 36 [-1088: -1063] | RU 37 [-1062: -1037] | |
| | RU 38 [-1011: -986] | RU 39 [-985:-960] | RU 40 [-957: -932] | RU 41 [-931: -906] | RU 42 [-904: -879] |
| | RU 43 [-877: -852] | RU 44 [-851: -826] | RU 45 [-823: -798] | RU 46 [-797: -772] | |
| | RU 47 [-764: -739] | RU 48 [-738: -713] | RU 49 [-710: -685] | RU 50 [-684: -659] | RU 51 [-657: -632] |
| | RU 52 [-630: -605] | RU 53 [-604: -579] | RU 54 [-576: -551] | RU 55 [-550: -525] | RU 56 [not defined] |
| | RU 57 [-499: -474] | RU 58 [-473: -448] | RU 59 [-445: -420] | RU 60 [-419: -394] | RU 61 [-392: -367] |
| | RU 62 [-365:-340] | RU 63 [-339: -314] | RU 64 [-311: -286] | RU 65 [-285: -260] | |
| | RU 66 [-252: -227] | RU 67 [-226: -201] | RU 68 [-198: -173] | RU 69 [-172:-147] | RU 70 [-145: -120] |
| | RU 71 [-118: -93] | RU 72 [-92: -67] | RU 73 [-64: -39] | **RU** 74 [-38: -13] | |
| | RU 75 [13: 38] | RU 76 [39: 64] | RU 77 [67: 92] | RU 78 [93: 118] | RU 79 [120: 145] |
| | RU 80 [147: 172] | RU 81 [173: 198] | RU 82 [201: 226] | RU 83 [227: 252] | |
| | RU 84 [260: 285] | RU 85 [286: 311] | RU 86 [314: 339] | RU 87 [340: 365] | RU 88 [367: 392] |
| | RU 89 [394: 419] | RU 90 [420: 445] | RU 91 [448: 473] | RU 92 [474: 499] | RU 93 [not defined] |
| | RU 94 [525: 550] | RU 95 [551: 576] | RU 96 [579: 604] | RU 97 [605: 630] | RU 98 [632: 657] |
| 26-tone RU | RU 99 [659: 684] | RU 100 [685: 710] | RU 101 [713: 738] | RU 102 [739: 764] | |
| | RU 103 [772: 797] | RU 104 [798: 823] | RU 105 [826: 851] | RU 106 [852: 877] | RU 107 [879: 904] |
| | RU 108 [906: 931] | RU 109 [932: 957] | RU 110 [960: 985] | RU 111 [986: 1011] | |
| | RU 112 [1037: 1062] | RU 113 [1063: 1088] | RU 114 [1091: 1116] | RU 115 [1117: 1142] | RU 116 [1144: 1169] |
| | RU 117 [1171: 1196] | RU 118 [1197: 1222] | RU 119 [1225: 1250] | RU 120 [1251: 1276] | |
| | RU 121 [1284: 1309] | RU 122 [1310: 1335] | RU 123 [1338: 1363] | RU 124 [1364: 1389] | RU 125 [1391: 1416] |
| | RU 126 [1418: 1443] | RU 127 [1444: 1469] | RU 128 [1472: 1497] | RU 129 [1498: 1523] | RU 130 [not defined] |
| | RU 131 [1549: 1574] | RU 132 [1575: 1600] | RU 133 [1603: 1628] | RU 134 [1629: 1654] | RU 135 [1656: 1681] |
| | RU 136 [1683: 1708] | RU 137 [1709: 1734] | RU 138 [1737: 1762] | RU 139 [1763: 1788] | |
| | RU 140 [1796: 1821] | RU 141 [1822: 1847] | RU 142 [1850: 1875] | RU 143 [1876: 1901] | RU 144 [1903: 1928] |
| | RU 145 [1930: 1955] | RU 146 [1956: 1981] | RU 147 [1984: 2009] | RU 148 [2010: 2035] | |
| 52-tone RU | RU 1 [-2035: -1984] | RU 2 [-1981: -1930] | RU 3 [-1901: -1850] | RU 4 [-1847: -1796] | |
| | RU 5 [-1788: -1737] | RU 6 [-1734: -1683] | RU 7 [--1654: -1603] | RU 8 [-1600: -1549] | |
| | RU 9 [-1523: -1472] | RU 10 [-1469: -1418] | RU 11 [-1389: -1338] | RU 12 [-1335: -1284] | |
| | RU 13 [-1276: -1225] | RU 14 [-1222: -1171] | RU 15 [-1142: -1091] | RU 16 [-1088: -1037] | |
| | RU 17 [-1011: -960] | RU 18 [-957: -906] | RU 19 [-877: -826] | RU 20 [-823: -772] | |
| | RU 21 [-764: -713] | RU 22 [-710: -659] | RU 23 [-630: -579] | RU 24 [-576: -525] | |
| | RU 25 [-499: -448] | RU 26 [-445: -394] | RU 27 [-365:-314] | RU 28 [-311: -260] | |
| | RU 29 [-252: -201] | RU 30 [-198: --147] | RU 31 [-118: -67] | RU 32 [-64: -13] | |
| | RU 33 [13: 64] | RU 34 [67: 118] | RU 35 [147: 198] | RU 36 [201: 252] | |
| | RU 37 [260: 311] | RU 38 [314: 365] | RU 39 [394: 445] | RU 40 [448: 499] | |
| 52-tone RU | RU 41 [525: 576] | RU 42 [579: 630] | RU 43 [659: 710] | RU 44 [713: 764] | |
| | RU 45 [772: 823] | RU 46 [826: 877] | RU 47 [906: 957] | RU 48 [960: 1011] | |
| | RU 49 [1037: 1088] | RU 50 [1091: 1142] | RU 51 [1171: 1222] | RU 52 [1225: 1276] | |
| | RU 53 [1284: 1335] | RU 54 [1338: 1389] | RU 55 [1418: 1469] | RU 56 [1472: 1523] | |
| | RU 57 [1549: 1600] | RU 58 [1603: 1654] | RU 59 [1683: 1734] | RU 60 [1737: 1788] | |
| | RU 61 [1796: 1847] | RU 62 [1850: 1901] | RU 63 [1930: 1981] | RU 64 [1984: 2035] | |
| 106-tone RU | RU 1 [-2035: -1930] | RU 2 [-1901: -1796] | RU 3 [-1788: -1683] | RU 4 [-1654: -1549] | |
| | RU 5 [-1523: -1418] | RU 6 [-1389: -1284] | RU 7 [-1276: -1171] | RU 8 [-1142: -1037] | |
| | RU 9 [-1011: -906] | RU 10 [-877: -772] | RU 11 [-764:-659] | RU 12 [-630: -525] | |
| | RU 13 [-499: --394] | RU 14 [-365: -260] | RU 15 [-252: -147] | RU 16 [-118: -13] | |
| | RU 17 [13: 118] | RU 18 [147: 252] | RU 19 [260: 365] | RU 20 [394: 499] | |
| | RU 21 [525: 630] | RU 22 [659: 764] | RU 23 \| [772: 877] | RU 24 [906: 1011] | |
| | RU 25 [1037: 1142] | RU 26 [1171: 1276] | RU 27 [1284: 1389] | RU 28 [1418: 1523] | |
| | RU 29 [1549: 1654] | RU 30 [1683: 1788] | RU 31 [1796: 1901] | RU 32 [1930: 2035] | |
| 242-tone RU | RU 1 [-2036: -1795] | RU 2 [-1789: -1548] | RU 3 [-1524: -1283] | RU 4 [-1277: -1036] | |
| | RU 5 [-1012: -771] | RU 6 [-765: -524] | RU 7 [-500: -259] | RU 8 [-253: -12] | |
| | RU 9 [12: 253] | RU 10 [259: 500] | RU 11 [524: 765] | RU 12 [771: 1012] | |
| | RU 13 [1036: 1277] | RU 14 [1283: 1524] | RU 15 [1548: 1789] | RU 16 [1795: 2036] | |
| 484-tone RU | RU 1 [-2036: -1795, -1789: -1548] | RU 2 [-1524: -1283, -1277: -1036] | RU 3 [-1012: -771, -765: -524] | RU 4 [-500: -259, -253: -12] | |
| | RU 5 [12: 253, 259: 500] | RU 6 [524: 765, 771: 1012] | RU 7 [1036: 1277, 1283: 1524] | RU 8 [1548: 1789, 1795: 2036] | |
| 996-tone RU | RU 1 [-2036: -1539, -1533: -1036] | RU 2 [-1012: -515, -509: -12] | RU 3 [12: 509, 515: 1012] | RU 4 [1036: 1533, 1539: 2036] | |
| 2×996-tone RU | RU 1 [-2036: -1539, -1533: -1036, -1012: -515, -509: -12] | RU 2 [12: 509, 515: 1012, 1036: 1533, 1539: 2036] | | | |
| 4×996-tone RU | RU 1 [-2036: -1539, -1533: -1036, -1012: -515, -509: -12, 12: 509, 515: 1012, 1036: 1533, 1539: 2036] | | | | |

In Table 3, RU 5 corresponds to the middle 26-tone RU.

Referring to Tables 3 to 7, subcarrier index 0 corresponds to the DC tone. Negative subcarrier indices correspond to subcarriers having a lower frequency than the DC tone. Positive subcarrier indices correspond to subcarriers having a higher frequency than the DC tone. DC subcarriers may mean subcarriers having zero energy while including the DC tone and subcarrier indices adjacent to subcarrier index 0 (i.e., the DC tone). Guard subcarriers may mean subcarriers located at the edge of an OFDM symbol in the frequency domain and having zero energy. Null subcarriers are located near the DC or edge tone to protect against transmission center frequency leakage, receiver DC offset, and interference from adjacent RU(s) or MRU(s), and have zero energy.

Referring to FIGS. 9 to 11 and Tables 3 to 7, for each RU, an RU index may be assigned in order from low frequency to high frequency.

A PPDU in the range of 160 MHz or more may be composed of multiple 80 MHz frequency subblocks. The tone plan and RU allocation for each 80 MHz frequency subblock may be the same as that of the 80 MHz PPDU. If the 80 MHz frequency subblock of a 160 MHz or 320 MHz PPDU is not punctured and the entire 80 MHz frequency subblock is used as an RU or as part of an RU/MRU, the 80 MHz frequency subblock may use the 996-tone RU illustrated in FIG. 10. If an 80 MHz frequency subblock includes RUs with fewer than 996 tones or a portion of the 80 MHz frequency subblock is punctured, the 80 MHz frequency subblock may use a tone plan and RU allocation excluding the 996-tone RUs as illustrated in FIG. 10.

Multiple RUs (MRUs) may be allocated to an STA. Subcarrier indices of the MRU may be composed of indices of the corresponding RUs constituting the MRU.

The RU of the present disclosure can be used for uplink (UL) and/or downlink (DL) communication. For example, when trigger-based UL-MU communication is performed, an STA (e.g., an AP) transmitting a trigger can allocate a first RU (e.g., 26/52/106/242-RU, etc.) to a first STA and a second RU (e.g., 26/52/106/242-RU, etc.) to a second STA through trigger information (e.g., a trigger frame or TRS (triggered response scheduling)). Thereafter, the first STA can transmit a first trigger-based (TB) PPDU based on the first RU, and the second STA can transmit a second TB PPDU based on the second RU. The first/second TB PPDUs can be transmitted to the AP in the same time interval.

For example, when a DL MU PPDU is configured, an STA (e.g., an AP) transmitting the DL MU PPDU may allocate a first RU (e.g., 26/52/106/242-RU, etc.) to a first STA and a second RU (e.g., 26/52/106/242-RU, etc.) to a second STA.

### EHT-SIG field

The EHT-SIG field of a 20 MHz EHT MU PPDU includes one EHT-SIG content channel. For OFDMA transmission and non-OFDMA transmission for multi-user, the EHT-SIG field of an EHT MU PPDU of 40 MHz or 80 MHz includes two EHT-SIG content channels. For OFDMA transmission and non-OFDMA transmission for multi-user, the EHT-SIG field of an EHT MU PPDU of 160 MHz or more contains two EHT-SIG content channels per 80 MHz frequency subblock. When the bandwidth of an EHT MU PPDU for OFDMA transmission is wider than 80 MHz, the EHT-SIG content channels per 80 MHz frequency subblock may carry different information.

Each EHT-SIG content channel may incldues a common field and a user-specific field, where the common field may include one or two RU allocation subfields depending on the PPDU frequency bandwidth.

For OFDMA transmission, the common field of the EHT-SIG content channel may include information for RU allocation, such as RU allocation to be used in the EHT modulation field of the PPDU, RUs allocated to MU-MIMO, number of users in MU-MIMO allocation, etc. When the bandwidth is 20/30/80 MHz, the common field may be composed of one common encoding block, and the common encoding block may include one or two RU Allocation-A subfields. When the bandwidth is 160 MHz, the common field may be composed of two common encoding blocks, and the first common encoding block may include two RU Allocation-A subfields, and the second common encoding block may include two RU Allocation-B subfields. When the bandwidth is 320 MHz, the common field may be composed of two common encoding blocks, and the first common encoding block may include two RU Allocation-A subfields, and the second common encoding block may include six RU Allocation-B subfields.

In non-OFDMA transmission, the common field of the EHT-SIG content channel may not include the RU allocation subfield.

Each RU allocation-A subfield of the EHT-SIG content channel corresponding to a 20 MHz frequency subchannel may indicate RU or MRU allocation, including the size of the RU(s)/MRU(s) and their arrangement in the frequency domain. Each RU allocation-A subfield may also indicate information necessary to calculate the number of users allocated to each RU(s)/MRU(s).

Each RU Allocation-B subfield of an EHT-SIG content channel corresponding to a 20 MHz frequency subchannel may indicate RU or MRU allocation, including the size of RU(s)/MRU(s) and their arrangement in the frequency domain. Each RU Allocation-B subfield may also indicate information necessary to calculate the number of users allocated to each RU(s)/MRU(s).

Both the RU Allocation-A subfield and the RU Allocation-B subfield may be referred to as RU Allocation subfields located in different common encoding blocks.

For OFDMA transmission wider than 80 MHz, the RU Allocation subfield per 80 MHz frequency subblock may convey consistent RU or MRU size and arrangement information for the entire PPDU.

Table 8 illustrates the number of user fields per RU or MRU associated with a user-specific field within the same EHT SIG content channel, along with the mapping from the 9-bit RU Allocation subfield to RU Allocation.

**[Table 8]**

| **RU Allocation subfield (B8 B7 B6 B5 B4 B3 B2 B1 B0)** | **1** | **2** | **3** | **4** | **5** | **6** | **7** | **8** | **9** | **Number of entries** |
|---|---|---|---|---|---|---|---|---|---|---|
| 0 (000000000) | 26 | 26 | 26 | 26 | 26 | 26 | 26 | 26 | 26 | 1 |
| 1 (000000001) | 26 | 26 | 26 | 26 | 26 | 26 | 26 | 52 | | 1 |
| 2 (000000010) | 26 | 26 | 26 | 26 | 26 | 52 | | 26 | 26 | 1 |
| 3 (000000011) | 26 | 26 | 26 | 26 | 26 | 52 | | 52 | | 1 |
| 4 (000000100) | 26 | 26 | 52 | | 26 | 26 | 26 | 26 | 26 | 1 |
| 5 (000000101) | 26 | 26 | 52 | | 26 | 26 | 26 | 52 | | 1 |
| 6 (000000110) | 26 | 26 | 52 | | 26 | 52 | | 26 | 26 | 1 |
| 7 (000000111) | 26 | 26 | 52 | | 26 | 52 | | 52 | | 1 |
| 8 (000001000) | 52 | | 26 | 26 | 26 | 26 | 26 | 26 | 26 | 1 |
| 9 (000001001) | 52 | | 26 | 26 | 26 | 26 | 26 | 52 | | 1 |
| 10 (000001010) | 52 | | 26 | 26 | 26 | 52 | | 26 | 26 | 1 |
| 11 (000001011) | 52 | | 26 | 26 | 26 | 52 | | 52 | | 1 |
| 12 (000001100) | 52 | | 52 | | 26 | 26 | 26 | 26 | 26 | 1 |
| 13 (000001101) | 52 | | 52 | | 26 | 26 | 26 | 52 | | 1 |
| 14 (000001110) | 52 | | 52 | | 26 | 52 | | 26 | 26 | 1 |
| 15 (000001111) | 52 | | 52 | | 26 | 52 | | 52 | | 1 |
| 16 (000010000) | 26 | 26 | 26 | 26 | 26 | 106 | | | | 1 |
| 17 (000010001) | 26 | 26 | 52 | | 26 | 106 | | | | 1 |
| 18 (000010010) | 52 | | 26 | 26 | 26 | 106 | | | | 1 |
| 19 (000010011) | 52 | | 52 | | 26 | 106 | | | | 1 |
| 20 (000010100) | 106 | | | | 26 | 26 | 26 | 26 | 26 | 1 |
| 21 (000010101) | 106 | | | | 26 | 26 | 26 | 52 | | 1 |
| 22 (000010110) | 106 | | | | 26 | 52 | | 26 | 26 | 1 |
| 23 (000010111) | 106 | | | | 26 | 52 | | 52 | | 1 |
| 24 (000011000) | 52 | | 52 | | - | 52 | | 52 | | 1 |
| 25 (000011001) | 106 | | | | 26 | 106 | | | | 1 |
| 26 (000011010) | Punctured 242-tone RU | | | | | | | | | 1 |
| 27 (000011011) | Unassigned 242-tone RU | | | | | | | | | 1 |
| 28 (000011100) | 242-tone RU; allocated but contributes zero User fields to the User Specific field in the same EHT-SIG content channel as this RU Allocation subfield. | | | | | | | | | 1 |
| 29 (000011101) | 484-tone RU; allocated but contributes zero User fields to the User Specific field in the same EHT-SIG content channel as this RU Allocation subfield. | | | | | | | | | 1 |
| 30 (000011110) | 996-tone RU; allocated but contributes zero User fields to the User Specific field in the same EHT-SIG content channel as this RU Allocation subfield. | | | | | | | | | 1 |
| 31 (000011111) | Validate | | | | | | | | | 1 |
| 32 (000100000) | 26 | 26 | 26 | 26 | 26 | 52+26 | | | 26 | 1 |
| 33 (000100001) | 26 | 26 | 52 | | 26 | 52+26 | | | 26 | 1 |
| 34 (000100010) | 52 | | 26 | 26 | 26 | 52+26 | | | 26 | 1 |
| 35 (000100011) | 52 | | 52 | | 26 | 52+26 | | | 26 | 1 |
| 36 (000100100) | 26 | 52+26 | | | 26 | 26 | 26 | 26 | 26 | 1 |
| 37 (000100101) | 26 | 52+26 | | | 26 | 26 | 26 | 52 | | 1 |
| 38 (000100110) | 26 | 52+26 | | | 26 | 52 | | 26 | 26 | 1 |
| 39 (000100111) | 26 | 52+26 | | | 26 | 52 | | 52 | | 1 |
| 40 (000101000) | 26 | 26 | 26 | 26 | 106+26 | | | | | 1 |
| 41 (000101001) | 26 | 26 | 52 | | 106+26 | | | | | 1 |
| 42 (000101010) | 52 | | 26 | 26 | 106+26 | | | | | 1 |
| 43 (000101011) | 52 | | 52 | | 106+26 | | | | | 1 |
| 44 (000101100) | 106+26 | | | | | 26 | 26 | 26 | 26 | 1 |
| 45 (000101101) | 106+26 | | | | | 26 | 26 | 52 | | 1 |
| 46 (000101110) | 106+26 | | | | | 52 | | 26 | 26 | 1 |
| 47 (000101111) | 106+26 | | | | | 52 | | 52 | | 1 |
| 48 (000110000) | 106+26 | | | | | 106 | | | | 1 |
| 49 (000110001) | 106+26 | | | | | 52+26 | | | 26 | 1 |
| 50 (000110010) | 106 | | | | 106+26 | | | | | 1 |
| 51 (000110011) | 26 | 52+26 | | | 106+26 | | | | | 1 |
| 52 (000110100) | 106 | | | | 26 | 52+26 | | | 26 | 1 |
| 53 (000110101) | 26 | 52+26 | | | 26 | 106 | | | | 1 |
| 54 (000110110) | 26 | 52+26 | | | 26 | 52+26 | | | 26 | 1 |
| 55 (000110111) | 52 | | 52+26 | | | 52 | | 52 | | 1 |
| 56-63 (000111000-000111111) | Validate | | | | | | | | | 8 |
| 64-71 (001000y₂y₁y₀) | 242 | | | | | | | | | 8 |
| 72-79 (001001y₂y₁y₀) | 484 | | | | | | | | | 8 |
| 80-87 (001010y₂y₁y₀) | 996 | | | | | | | | | 8 |
| 88-95 (001011y₂y₁y₀) | 2×996 | | | | | | | | | 8 |
| 96-103 (001100y₂y₁y₀) | MRU of pattern [gap-242]-242-484, specifically 484+242-tone MRU-1, 5, 9, and 13 within the first, second, third, and fourth 80 MHz frequency subblock in increasing frequency order, respectively | | | | | | | | | 8 |
| 104-111 (001101y₂y₁y₀) | MRU of pattern 242-[gap-242]-484, specifically 484+242-tone MRU-2, 6, 10, and 14 within the first, second, third, and fourth 80 MHz frequency subblock in increasing frequency order, respectively | | | | | | | | | 8 |
| 112-119 (001110y₂y₁y₀) | MRU of pattern 484-[gap-242]-242, specifically 484+242-tone MRU-3, 7, 11, and 15 within the first, second, third, and fourth 80 MHz frequency subblock in increasing frequency order, respectively | | | | | | | | | 8 |
| 120-127 (001111y₂y₁y₀) | MRU of pattern 484-242-[gap-242], specifically 484+242-tone MRU-4, 8, 12, and 16 within the first, second, third, and fourth 80 MHz frequency subblock in increasing frequency order, respectively | | | | | | | | | 8 |
| 128-135 (010000y₂y₁y₀) | MRU of pattern [gap-484]-484-996, specifically 996+484-tone MRU-1 and 5 within the first and second 160 MHz subblock in increasing frequency order, respectively | | | | | | | | | 8 |
| 136-143 (010001y₂y₁y₀) | MRU of pattern 484-[gap-484]-996, specifically 996+484-tone MRU-2 and 6 within the first and second 160 MHz subblock in increasing frequency order, respectively | | | | | | | | | 8 |
| 144-151 (010010y₂y₁y₀) | MRU of pattern 996-[gap-484]-484, specifically 996+484-tone MRU-3 and 7 within the first and second 160 MHz subblock in increasing frequency order, respectively | | | | | | | | | 8 |
| 152-159 (010011y₂y₁y₀) | MRU of pattern 996-484-[gap-484], specifically 996+484-tone MRU-4 and 8 within the first and second 160 MHz subblock in increasing frequency order, respectively | | | | | | | | | 8 |
| 160-167 (010100y₂y₁y₀) | MRU of pattern [gap-996]-996-996-996, specifically 3×996-tone MRU-1 | | | | | | | | | 8 |
| 168-175 (010101y₂y₁y₀) | MRU of pattern 996-[gap-996]-996-996, specifically 3×996-tone MRU-2 | | | | | | | | | 8 |
| 176-183 (010110y₂y₁y₀) | MRU of pattern 996-996-[gap-996]-996, specifically 3×996-tone MRU-3 | | | | | | | | | 8 |
| 184-191 (010111y₂y₁y₀) | MRU of pattern 996-996-996-[gap-996], specifically 3×996-tone MRU-4 | | | | | | | | | 8 |
| 192-199 (011000y₂y₁y₀) | MRU of pattern [gap-484]-484-996-996-996, specifically 3×996+484 tone MRU-1 | | | | | | | | | 8 |
| 200-207 (011001y₂y₁y₀) | MRU of pattern 484-[gap-484]-996-996-996, specifically 3×996+484-tone MRU-2 | | | | | | | | | 8 |
| 208-215 (011010y₂y₁y₀) | MRU of pattern 996-[gap-484]-484-996-996, specifically 3×996+484-tone MRU-3 | | | | | | | | | 8 |
| 216-223 (011011y₂y₁y₀) | MRU of pattern 996-484-[gap-484]-996-996, specifically 3×996+484-tone MRU-4 | | | | | | | | | 8 |
| 224-231 (011100y₂y₁y₀) | MRU of pattern 996-996-[gap-484]-484-996, specifically 3×996+484-tone MRU-5 | | | | | | | | | 8 |
| 232-239 (011101y₂y₁y₀) | MRU of pattern 996-996-484-[gap-484]-996, specifically 3×996+484-tone MRU-6 | | | | | | | | | 8 |
| 240-247 (011110y₂y₁y₀) | MRU of pattern 996-996-996-[gap-484]-484, specifically 3×996+484-tone MRU-7 | | | | | | | | | 8 |
| 248-255 (011111y₂y₁y₀) | MRU of pattern 996-996-996-484-[gap-484], specifically 3×996+484-tone MRU-8 | | | | | | | | | 8 |
| 256-263 (100000y₂y₁y₀) | MRU of pattern [gap-484]-484-996-996, specifically 2×996+484-tone MRU-1 and 7 within the 240 MHz subblock composed of the first, second, and third 80 MHz frequency subblock and the 240 MHz subblock composed of the second, third, and fourth 80 MHz frequency subblock in increasing frequency order, respectively | | | | | | | | | 8 |
| 264-271 (100001y₂y₁y₀) | MRU of pattern 484-[gap-484]-996-996, specifically 2×996+484-tone MRU-2 and 8 within the 240 MHz subblock composed of the first, second, and third 80 MHz frequency subblock and the 240 MHz subblock composed of the second, third, and fourth 80 MHz frequency subblock in increasing frequency order, respectively | | | | | | | | | 8 |
| 272-279 (100010y₂y₁y₀) | MRU of pattern 996-[gap-484]-484-996, specifically 2×996+484-tone MRU-3 and 9 within the 240 MHz subblock composed of the first, second, and third 80 MHz frequency subblock and the 240 MHz subblock composed of the second, third, and fourth 80 MHz frequency subblock in increasing frequency order, respectively | | | | | | | | | 8 |
| 280-287 (100011y₂y₁y₀) | MRU of pattern 996-484-[gap-484]-996, specifically 2×996+484-tone MRU-4 and 10 within the 240 MHz subblock composed of the first, second, and third 80 MHz frequency subblock and the 240 MHz subblock composed of the second, third, and fourth 80 MHz frequency subblock in increasing frequency order, respectively | | | | | | | | | 8 |
| 288-295 (100100y₂y₁y₀) | MRU of pattern 996-996-[gap-484]-484, specifically 2×996+484-tone MRU-5 and 11 within the 240 MHz subblock composed of the first, second, and third 80 MHz frequency subblock and the 240 MHz subblock composed of the second, third, and fourth 80 MHz frequency subblock in increasing frequency order, respectively | | | | | | | | | 8 |
| 296-303 (100101y₂y₁y₀) | MRU of pattern 996-996-484-[gap-484], specifically 2×996+484-tone MRU-6 and 12 within the 240 MHz subblock composed of the first, second, and third 80 MHz frequency subblock and the 240 MHz subblock composed of the second, third, and fourth 80 MHz frequency subblock in increasing frequency order, respectively | | | | | | | | | 8 |
| 304-511 (100110y₂y₁y₀-111111y₂y₁y₀) | Disregard | | | | | | | | | 26×8 |

Referring to Table 8, for a RU allocation subfield having a value greater than or equal to 64, y₂y₁y₀ = 000-111 indicates the number of user fields in the EHT-SIG content channel including the corresponding 9-bit RU allocation subfield. The binary vector y₂y₁y₀ indicates N_{uscr}(r,c)=2² × y₂ + 2¹ × y₁ + y₀ + 1 user fields in the EHT-SIG content channel containing the corresponding 9-bit RU allocation subfield.

In Table 8, the Number of Entries column may mean the number of RU allocation subfield values that refer to the same RU allocation used in the frequency domain. However, due to different RU allocation subfield values, different numbers of user fields may be included in the user-specific fields of the same EHT-SIG content channel as this RU allocation subfield.

If the RU allocation subfield in Table 8 has a value designated as disregard, the STA may skip Nuser(r,c) user fields indicated by the subfield value and continue processing the EHT-SIG field.

Table 9 illustrates RUs or MRUs associated with each RU allocation subfield for each EHT-SIG content channel and PPDU bandwidth.

**[Table 9]**

| **PPDU bandwidth** | **RU Allocation subfield** | **RUs or MRUs in the subcarrier range, or overlapping with the subcarrier range if the RU or MRU is larger than a 242-tone RU** |
|---|---|---|
| 20 MHz | The RU Allocation subfield in a single EHT-SIG content channel | [-122: 122] |
| 40 MHz | The RU Allocation subfield in EHT-SIG content channel 1 | [-244: -3] |
| | The RU Allocation subfield in EHT-SIG content channel 2 | [3: 244] |
| 80 MHz | The first RU Allocation subfield in EHT-SIG content channel 1 | [-500: -259] |
| | The first RU Allocation subfield in EHT-SIG content channel 2 | [-253: -12] |
| | The second RU Allocation subfield in EHT-SIG content channel 1 | [12: 253] |
| | The second RU Allocation subfield in EHT-SIG content channel 2 | [259: 500] |
| 160 MHz | The first RU Allocation subfield in EHT-SIG content channel 1 | [-1012: -771] |
| | The first RU Allocation subfield in EHT-SIG content channel 2 | [-765: -524] |
| | The second RU Allocation subfield in EHT-SIG content channel 1 | [-500: -259] |
| | The second RU Allocation subfield in EHT-SIG content channel 2 | [-253: -12] |
| | The third RU Allocation subfield in EHT-SIG content channel 1 | [12: 253] |
| | The third RU Allocation subfield in EHT-SIG content channel 2 | [259: 500] |
| | The fourth RU Allocation subfield in EHT-SIG content channel 1 | [524: 765] |
| | The fourth RU Allocation subfield in EHT-SIG content channel 2 | [771: 1012] |
| 320 MHz | The first RU Allocation subfield in EHT-SIG content channel 1 | [-2036: -1795] |
| | The first RU Allocation subfield in EHT-SIG content channel 2 | [-1789: -1548] |
| | The second RU Allocation subfield in EHT-SIG content channel 1 | [-1524: -1283] |
| | The second RU Allocation subfield in EHT-SIG content channel 2 | [-1277: -1036] |
| | The third RU Allocation subfield in EHT-SIG content channel 1 | [-1012: -771] |
| | The third RU Allocation subfield in EHT-SIG content channel 2 | [-765: -524] |
| | The fourth RU Allocation subfield in EHT-SIG content channel 1 | [-500: -259] |
| | The fourth RU Allocation subfield in EHT-SIG content channel 2 | [-253: -12] |
| | The fifth RU Allocation subfield in EHT-SIG content channel 1 | [12: 253] |
| | The fifth RU Allocation subfield in EHT-SIG content channel 2 | [259: 500] |
| | The sixth RU Allocation subfield in EHT-SIG content channel 1 | [524: 765] |
| | The sixth RU Allocation subfield in EHT-SIG content channel 2 | [771: 1012] |
| | The seventh RU Allocation subfield in EHT-SIG content channel 1 | [1036: 1277] |
| | The seventh RU Allocation subfield in EHT-SIG content channel 2 | [1283: 1524] |
| | The eighth RU Allocation subfield in EHT-SIG content channel 1 | [1548: 1789] |
| | The eighth RU Allocation subfield in EHT-SIG content channel 2 | [1795: 2036] |

Table 10 shows an example of the index of null subcarriers for each RU size when the channel bandwidth is 20 MHz and 40 MHz.

**[Table 10]**

| **Channel width** | **RU size** | **Null subcarrier indices** |
|---|---|---|
| 20 MHz | 26, 52 | ± 69, ± 122 |
| | 106 | none |
| | 242 | none |
| 40 MHz | 26, 52 | ± 3, ± 56, ± 57, ± 110, ± 137, ± 190, ± 191, ± 244 |
| | 106 | ± 3, ± 110, ± 137, ± 244 |
| | 242, 484 | none |

Table 11 shows examples of the indices of null subcarriers for each RU size when the channel bandwidth is 80 MHz, 160 MHz, and 320 MHz.

**[Table 11]**

| **Channel width** | **RU size** | **Null subcarrier indices** |
|---|---|---|
| 80 MHz | 26, 52, 106 | {null subcarrier indices in 40 MHz - 256, null subcarrier indices in 40 MHz + 256, ±254, ±255, ±256, ±257, ±258} |
| | 242, 484 | ±254, ±255, ±256, ±257, ±258 |
| | 996 | None |
| 160 MHz | 26, 52, 106, 242, 484 | {null subcarrier indices in 80 MHz - 512, null subcarrier indices in 80 MHz + 512, ±501, ±502, ±503, ±504, ±505, ±506, ±507, ±508, ±509, ±510, ±511, ±512, ±513, ±514, ±515, ±516, ±517, ±518, ±519, ±520, ±521, ±522, ±523} |
| | 996, 2×996 | ±510, ±511, ±512, ±513, ±514 |
| 320 MHz | 26, 52, 106, 242, 484, 996, 2×996 | {null subcarrier indices in 160 MHz - 1024, null subcarrier indices in 160 MHz + 1024, ±1013, ±1014, ±1015, ±1016, ±1017, ±1018, ±1019, ±1020, ±1021, ±1022, ±1023, ±1024, ±1025, ±1026, ±1027, ±1028, ±1029, ±1030, ±1031, ±1032, ±1033, ±1034, ±1035} |
| | 4×996 | ±510, ±511, ±512, ±513, ±514, ±1013, ±1014, ±1015, ±1016, ±1017, ±1018, ±1019, ±1020, ±1021, ±1022, ±1023, ±1024, ±1025, ±1026, ±1027, ±1028, ±1029, ±1030, ±1031, ±1032, ±1033, ±1034, ±1035, ±1534, ±1535, ±1536, ±1537, ±1538 |

### Distributed RU (DRU) allocation method

Power spectral density (PSD) in the band below 7 GHz is limited according to regulations in each region.

Here, the PSD limitation is more stringent in the 6GHz band, and the PSD limitation for non-AP STAs in the low power indoor (LPI) band is -1dBm/MHz. Here, for the 52-tone RU, the maximum transmit power is about 6dBm. That is, the transmit power cannot be increased to the maximum transmit power due to the PSD limitation.

The limitations in the 2.4GHz and 5GHz bands may differ from each other depending on the regulations in each region. For example, a 10dBm/MHz PSD limitation is applied in the 2.4GHz band in Europe/China/Japan/Korea. Here, for the 52-tone RU, the maximum transmit power is about 17dBm.

Transmit power can be increased even in the 5 GHz band if PSD limitations can be avoided. For a 52-tone RU, the maximum transmit power is currently about 24 dBm, which is 6 dB lower than the maximum allowable effective isotropically radiated power (EIRP) of 30 dBm.

As above, if the PSD limitation can be overcome, the transmission power can be improved, and the spectrum efficiency or range extension can be improved.

Here, the PSD limitations described above are defined per MHz and per STA. That is, by distributing small RU tones over a wide bandwidth, the tones of each STA become non-contiguous, and thus each tone can be transmitted at higher power.

In the present disclosure, for convenience of explanation, RUs defined by contiguous tones in existing WLAN systems (e.g., IEEE 802.11ax, IEEE 802.11be, etc.) may be referred to as regular RUs (RRUs), and RUs defined by distributed (i.e., non-contiguous) tones may be referred to as distributed tones RUs (DRUs). However, this is merely an example, and the present disclosure is not limited to these terms.

For STAs transmitting DRUs, they can transmit at higher power compared to RRUs. For example, for a 52-tone DRU in an 80 MHz band, there can be only one tone per MHz. On the other hand, for a 52-tone RRU, there are about 13 tones per MHz. Since the PSD limit in the 6 GHz LPI band is -1 dBm/MHz, for a 52-tone RU, the transmit power can be increased by up to 11 dB by using DRUs. This significant transmit power boost enables a higher MCS and allows signals to reach a longer range.

FIG. 12 illustrates application of distributed-tone RUs in a wireless LAN system to which the present disclosure can be applied.

Referring to FIG. 12, STA1 can transmit UL OFDMA PPDU in DRU1, STA2 can transmit UL OFDMA PPDU in DRU2, and STA3 can transmit UL OFDMA PPDU in DRU3. Here, STA1, STA2, and STA3 can all boost the transmission power by using DRU. In this way, DRU can be particularly useful for UL-OFDMA.

To maximize the power boost, the tones within a DRU need to be distributed as widely as possible. For example, it can be 1 tone/MHz. In addition, to avoid additional complexity, the DRU size needs to be kept the same as the RRU size.

Table 12 illustrates the achievable power boost for various DRUs in various bandwidths.

**[Table 12]**

| | BW20 | BW40 | BW80 |
|---|---|---|---|
| | Power Boost (dB) | Power Boost (dB) | Power Boost (dB) |
| RU26 | 8.13 | 11.14 | 11.14 |
| RU52 | 6.37 | 8.13 | 11.14 |
| RU106 | 3.36 | 6.37 | 8.13 |
| RU242 | N/A | 2.69 | 5.12 |
| RU484 | N/A | N/A | 2.69 |

In this way, the DRU can overcome the PSD limitation and bring significant gains. For example, in the case of 80MHz UL-OFDMA transmission with 8 users, if each user uses a 106-tone DRU, the overall performance can be improved by 8.13dB compared to if each user uses a 106-tone RRU.

As described above, in order to overcome PSD constraints and obtain better power gain in a wireless LAN system (802.11), a RU (i.e., a distributed tones RU (DRU)) that uses distributed tones rather than contiguous tones can be defined.

The present disclosure proposes a method for mapping a DRU tone plan defined in a 80 MHz channel to an existing tone plan (i.e., an RRU tone plan). This is to maximize the use of existing signaling when allocating a DRU.

Hereinafter, in the description of the present disclosure, a subcarrier may be interpreted as having the same meaning as a tone unless explicitly distinguished.

Referring again to FIG. 11, FIG. 11 illustrates a conventional 80MHz tone plan when RRU is used.

As shown in FIG. 11, a larger RRU can be configured by combining smaller RRUs, and similarly, a larger DRU can be configured by combining smaller DRUs, and considering this, the following DRU tone plan can be applied.

Hereinafter, the 80 MHz DRU tone plan exemplified in this disclosure defines DRUs with the same RU size and the same number of tones as the existing 80 MHz RRU tone plan (except for 996 DRUs), and it is also assumed that the same number and same positions of guard/null/DC tones are used.

### A. 26 DRU index (i.e., 26 DRU tone plan)

In the description below, the notation "DRU-x" means that the index of the DRU is x.

Method 1) In the frequency domain, one tone can be allocated in order from the lowest frequency available tone to the highest frequency available tone, with 36 RUs of 26 tones each.
- 26 DRU-1: -499, -463, -425, -388, -351, -315, -277, -234, -196, -160, -123, -86, -48, 13, 49, 87, 124, 161, 197, 235, 278, 316, 352, 389, 426, 464
- 26 DRU-2: -498, -462, -424, -387, -350, -314, -276, -233, -195, -159, -122, -85, -47, 14, 50, 88, 125, 162, 198, 236, 279, 317, 353, 390, 427, 465
- 26 DRU-3: -497, -461, -423, -386, -349, -311, -275, -232, -194, -158, -121, -84, -46, 15, 51, 89, 126, 163, 201, 237, 280, 318, 354, 391, 428, 466
- 26 DRU-4: -496, -460, -422, -385, -348, -310, -274, -231, -193, -157, -120, -83, -45, 16, 52, 90, 127, 164, 202, 238, 281, 319, 355, 392, 429, 467
- 26 DRU-5: -495, -459, -421, -384, -347, -309, -273, -230, -192, -156, -118, -82, -44, 17, 53, 91, 128, 165, 203, 239, 282, 320, 356, 394, 430, 468
- 26 DRU-6: -494, -458, -420, -383, -346, -308, -272, -229, -191, -155, -117, -81, -43, 18, 54, 92, 129, 166, 204, 240, 283, 321, 357, 395, 431, 469
- 26 DRU-7: -493, -457, -419, -382, -345, -307, -271, -228, -190, -154, -116, -80, -42, 19, 55, 93, 130, 167, 205, 241, 284, 322, 358, 396, 432, 470
- 26 DRU-8: -492, -456, -418, -381, -344, -306, -270, -227, -189, -153, -115, -79, -41, 20, 56, 94, 131, 168, 206, 242, 285, 323, 359, 397, 433, 471
- 26 DRU-9: -491, -455, -417, -380, -343, -305, -269, -226, -188, -152, -114, -78, -40, 21, 57, 95, 132, 169, 207, 243, 286, 324, 360, 398, 434, 472
- 26 DRU-10: -490, -454, -416, -379, -342, -304, -268, -225, -187, -151, -113, -77, -39, 22, 58, 96, 133, 170, 208, 244, 287, 325, 361, 399, 435, 473
- 26 DRU-11: -489, -453, -415, -378, -341, -303, -267, -224, -186, -150, -112, -76, -38, 23, 59, 97, 134, 171, 209, 245, 288, 326, 362, 400, 436, 474
- 26 DRU-12: -488, -452, -414, -377, -340, -302, -266, -223, -185, -149, -111, -75, -37, 24, 60, 98, 135, 172, 210, 246, 289, 327, 363, 401, 437, 475
- 26 DRU-13: -487, -451, -413, -376, -339, -301, -265, -222, -184, -148, -110, -74, -36, 25, 61, 99, 136, 173, 211, 247, 290, 328, 364, 402, 438, 476
- 26 DRU-14: -486, -450, -412, -375, -338, -300, -264, -221, -183, -147, -109, -73, -35, 26, 62, 100, 137, 174, 212, 248, 291, 329, 365, 403, 439, 477
- 26 DRU-15: -485, -449, -411, -374, -337, -299, -263, -220, -182, -145, -108, -72, -34, 27, 63, 101, 138, 175, 213, 249, 292, 330, 367, 404, 440, 478
- 26 DRU-16: -484, -448, -410, -373, -336, -298, -262, -219, -181, -144, -107, -71, -33, 28, 64, 102, 139, 176, 214, 250, 293, 331, 368, 405, 441, 479
- 26 DRU-17: -483, -445, -409, -372, -335, -297, -261, -218, -180, -143, -106, -70, -32, 29, 67, 103, 140, 177, 215, 251, 294, 332, 369, 406, 442, 480
- 26 DRU-18: -482, -444, -408, -371, -334, -296, -260, -217, -179, -142, -105, -69, -31, 30, 68, 104, 141, 178, 216, 252, 295, 333, 370, 407, 443, 481
- 26 DRU-19: -481, -443, -407, -370, -333, -295, -252, -216, -178, -141, -104, -68, -30, 31, 69, 105, 142, 179, 217, 260, 296, 334, 371, 408, 444, 482
- 26 DRU-20: -480, -442, -406, -369, -332, -294, -251, -215, -177, -140, -103, -67, -29, 32, 70, 106, 143, 180, 218, 261, 297, 335, 372, 409, 445, 483
- 26 DRU-21: -479, -441, -405, -368, -331, -293, -250, -214, -176, -139, -102, -64, -28, 33, 71, 107, 144, 181, 219, 262, 298, 336, 373, 410, 448, 484
- 26 DRU-22: -478, -440, -404, -367, -330, -292, -249, -213, -175, -138, -101, -63, -27, 34, 72, 108, 145, 182, 220, 263, 299, 337, 374, 411, 449, 485
- 26 DRU-23: -477, -439, -403, -365, -329, -291, -248, -212, -174, -137, -100, -62, -26, 35, 73, 109, 147, 183, 221, 264, 300, 338, 375, 412, 450, 486
- 26 DRU-24: -476, -438, -402, -364, -328, -290, -247, -211, -173, -136, -99, -61, -25, 36, 74, 110, 148, 184, 222, 265, 301, 339, 376, 413, 451, 487
- 26 DRU-25: -475, -437, -401, -363, -327, -289, -246, -210, -172, -135, -98, -60, -24, 37, 75, 111, 149, 185, 223, 266, 302, 340, 377, 414, 452, 488
- 26 DRU-26: -474, -436, -400, -362, -326, -288, -245, -209, -171, -134, -97, -59, -23, 38, 76, 112, 150, 186, 224, 267, 303, 341, 378, 415, 453, 489
- 26 DRU-27: -473, -435, -399, -361, -325, -287, -244, -208, -170, -133, -96, -58, -22, 39, 77, 113, 151, 187, 225, 268, 304, 342, 379, 416, 454, 490
- 26 DRU-28: -472, -434, -398, -360, -324, -286, -243, -207, -169, -132, -95, -57, -21, 40, 78, 114, 152, 188, 226, 269, 305, 343, 380, 417, 455, 491
- 26 DRU-29: -471, -433, -397, -359, -323, -285, -242, -206, -168, -131, -94, -56, -20, 41, 79, 115, 153, 189, 227, 270, 306, 344, 381, 418, 456, 492
- 26 DRU-30: -470, -432, -396, -358, -322, -284, -241, -205, -167, -130, -93, -55, -19, 42, 80, 116, 154, 190, 228, 271, 307, 345, 382, 419, 457, 493
- 26 DRU-31: -469, -431, -395, -357, -321, -283, -240, -204, -166, -129, -92, -54, -18, 43, 81, 117, 155, 191, 229, 272, 308, 346, 383, 420, 458, 494
- 26 DRU-32: -468, -430, -394, -356, -320, -282, -239, -203, -165, -128, -91, -53, -17, 44, 82, 118, 156, 192, 230, 273, 309, 347, 384, 421, 459, 495
- 26 DRU-33: -467, -429, -392, -355, -319, -281, -238, -202, -164, -127, -90, -52, -16, 45, 83, 120, 157, 193, 231, 274, 310, 348, 385, 422, 460, 496
- 26 DRU-34: -466, -428, -391, -354, -318, -280, -237, -201, -163, -126, -89, -51, -15, 46, 84, 121, 158, 194, 232, 275, 311, 349, 386, 423, 461, 497
- 26 DRU-35: -465, -427, -390, -353, -317, -279, -236, -198, -162, -125, -88, -50, -14, 47, 85, 122, 159, 195, 233, 276, 314, 350, 387, 424, 462, 498
- 26 DRU-36: -464, -426, -389, -352, -316, -278, -235, -197, -161, -124, -87, -49, -13, 48, 86, 123, 160, 196, 234, 277, 315, 351, 388, 425, 463, 499

Method 2) After assigning one tone each to 36 26-RU tones in order from the lowest frequency available tone in the frequency domain to the highest frequency available tone before the DC tone, mirror symmetry is applied so that a positive tone index can be assigned to each of 36 26-RU tones.
- 26 DRU-1: +-{48, 86, 123, 160, 196, 234, 277, 315, 351, 388, 425, 463, 499}
- 26 DRU-2: +-{47, 85, 122, 159, 195, 233, 276, 314, 350, 387, 424, 462, 498}
- 26 DRU-3: +-{46, 84, 121, 158, 194, 232, 275, 311, 349, 386, 423, 461, 497}
- 26 DRU-4: +-{45, 83, 120, 157, 193, 231, 274, 310, 348, 385, 422, 460, 496}
- 26 DRU-5: +-{44, 82, 118, 156, 192, 230, 273, 309, 347, 384, 421, 459, 495}
- 26 DRU-6: +-{43, 81, 117, 155, 191, 229, 272, 308, 346, 383, 420, 458, 494}
- 26 DRU-7: +-{42, 80, 116, 154, 190, 228, 271, 307, 345, 382, 419, 457, 493}
- 26 DRU-8: +-{41, 79, 115, 153, 189, 227, 270, 306, 344, 381, 418, 456, 492}
- 26 DRU-9: +-{40, 78, 114, 152, 188, 226, 269, 305, 343, 380, 417, 455, 491}
- 26 DRU-10: +-{39, 77, 113, 151, 187, 225, 268, 304, 342, 379, 416, 454, 490}
- 26 DRU-11: +-{38, 76, 112, 150, 186, 224, 267, 303, 341, 378, 415, 453, 489}
- 26 DRU-12: +-{37, 75, 111, 149, 185, 223, 266, 302, 340, 377, 414, 452, 488}
- 26 DRU-13: +-{36, 74, 110, 148, 184, 222, 265, 301, 339, 376, 413, 451, 487}
- 26 DRU-14: +-{35, 73, 109, 147, 183, 221, 264, 300, 338, 375, 412, 450, 486}
- 26 DRU-15: +-{34, 72, 108, 145, 182, 220, 263, 299, 337, 374, 411, 449, 485}
- 26 DRU-16: +-{33, 71, 107, 144, 181, 219, 262, 298, 336, 373, 410, 448, 484}
- 26 DRU-17: +-{32, 70, 106, 143, 180, 218, 261, 297, 335, 372, 409, 445, 483}
- 26 DRU-18: +-{31, 69, 105, 142, 179, 217, 260, 296, 334, 371, 408, 444, 482}
- 26 DRU-19: +-{30, 68, 104, 141, 178, 216, 252, 295, 333, 370, 407, 443, 481}
- 26 DRU-20: +-{29, 67, 103, 140, 177, 215, 251, 294, 332, 369, 406, 442, 480}
- 26 DRU-21: +-{28, 64, 102, 139, 176, 214, 250, 293, 331, 368, 405, 441, 479}
- 26 DRU-22: +-{27, 63, 101, 138, 175, 213, 249, 292, 330, 367, 404, 440, 478}
- 26 DRU-23: +-{26, 62, 100, 137, 174, 212, 248, 291, 329, 365, 403, 439, 477}
- 26 DRU-24: +-{25, 61, 99, 136, 173, 211, 247, 290, 328, 364, 402, 438, 476}
- 26 DRU-25: +-{24, 60, 98, 135, 172, 210, 246, 289, 327, 363, 401, 437, 475}
- 26 DRU-26: +-{23, 59, 97, 134, 171, 209, 245, 288, 326, 362, 400, 436, 474}
- 26 DRU-27: +-{22, 58, 96, 133, 170, 208, 244, 287, 325, 361, 399, 435, 473}
- 26 DRU-28: +-{21, 57, 95, 132, 169, 207, 243, 286, 324, 360, 398, 434, 472}
- 26 DRU-29: +-{20, 56, 94, 131, 168, 206, 242, 285, 323, 359, 397, 433, 471}
- 26 DRU-30: +-{19, 55, 93, 130, 167, 205, 241, 284, 322, 358, 396, 432, 470}
- 26 DRU-31: +-{18, 54, 92, 129, 166, 204, 240, 283, 321, 357, 395, 431, 469}
- 26 DRU-32: +-{17, 53, 91, 128, 165, 203, 239, 282, 320, 356, 394, 430, 468}
- 26 DRU-33: +-{16, 52, 90, 127, 164, 202, 238, 281, 319, 355, 392, 429, 467}
- 26 DRU-34: +-{15, 51, 89, 126, 163, 201, 237, 280, 318, 354, 391, 428, 466}
- 26 DRU-35: +-{14, 50, 88, 125, 162, 198, 236, 279, 317, 353, 390, 427, 465}
- 26 DRU-36: +-{13, 49, 87, 124, 161, 197, 235, 278, 316, 352, 389, 426, 464}

### B. 52 DRU index (i.e. 52 DRU tone plan)

52 DRU can be configured as a combination of two 26 DRUs, and can be defined as follows to distribute the tones as much as possible within each RU.
- 52 DRU-1: combination of 26 DRU-1 and 26 DRU-19
- 52 DRU-2: combination of 26 DRU-2 and 26 DRU-20
- 52 DRU-3: combination of 26 DRU-3 and 26 DRU-21
- 52 DRU-4: combination of 26 DRU-4 and 26 DRU-22
- 52 DRU-5: combination of 26 DRU-6 and 26 DRU-24
- 52 DRU-6: combination of 26 DRU-7 and 26 DRU-25
- 52 DRU-7: combination of 26 DRU-8 and 26 DRU-26
- 52 DRU-8: combination of 26 DRU-9 and 26 DRU-27
- 52 DRU-9: combination of 26 DRU-10 and 26 DRU-28
- 52 DRU-10: combination of 26 DRU-11 and 26 DRU-29
- 52 DRU-11: combination of 26 DRU-12 and 26 DRU-30
- 52 DRU-12: combination of 26 DRU-13 and 26 DRU-31
- 52 DRU-13: combination of 26 DRU-15 and 26 DRU-33
- 52 DRU-14: combination of 26 DRU-16 and 26 DRU-34
- 52 DRU-15: combination of 26 DRU-17 and 26 DRU-35
- 52 DRU-16: combination of 26 DRU-18 and 26 DRU-36

### C. 106 DRU index (i.e., 106 DRU tone plan)

106 DRU can be configured as a combination of two 52 DRUs and two null tones, and can be defined as follows to maximize tone distribution:
- 106 DRU-1: a combination of i) 52 DRU-1, ii) 52 DRU-9, and iii) two null tones (e.g., null tone -447, 65 or null tone -65, 447 or null tone -66, 446 or null tone -199, 313 or null tone -200, 312 or null tone -312, 200 or null tone -313, 199 or null tone -446, 66 in method 1); or a combination of i) 52 DRU-1, ii) 52 DRU-9, and iii) two null tones (e.g., null tone -447, 447 or null tone -65, 65 or null tone -66, 66 or null tone -199, 199 or null tone -200, 200 or null tone -312, 312 or null tone -313, 313 or null tone -446, 446 in method 2).
- 106 DRU-2: a combination of i) 52 DRU-2, ii) 52 DRU-10 and iii) two null tones (e.g., null tone -446, 66 or null tone -447, 65 or null tone -65, 447 or null tone -66, 446 or null tone -199, 313 or null tone -200, 312 or null tone -312, 200 or null tone -313, 199 in method 1); or a combination of i) 52 DRU-2, ii) 52 DRU-10, and iii) two null tones (e.g., null tone -446, 446 or null tone -447, 447 or null tone -65, 65 or null tone -66, 66 or null tone -199, 199 or null tone -200, 200 or null tone -312, 312 or null tone -313, 313 in method 2).
- 106 DRU-3: a combination of i) 52 DRU-3, ii) 52 DRU-11 and iii) two null tones (e.g., null tone -313, 199 or null tone -446, 66 or null tone -447, 65 or null tone -65, 447 or null tone -66, 446 or null tone -199, 313 or null tone -200, 312 or null tone -312, 200 in method 1); or a combination of i) 52 DRU-3, ii) 52 DRU-11 and iii) two null tones (e.g., null tone -313, 313 or null tone -446, 446 or null tone -447, 447 or null tone -65, 65 or null tone -66, 66 or null tone -199, 199 or null tone -200, 200 or null tone -312, 312 in method 2).
- 106 DRU-4: a combination of i) 52 DRU-4, ii) 52 DRU-12 and iii) two null tones (e.g., null tone -312, 200 or null tone -313, 199 or null tone -446, 66 or null tone -447, 65 or null tone -65, 447 or null tone -66, 446 or null tone -199, 313 or null tone -200, 312 in method 1); or a combination of i) 52 DRU-4, ii) 52 DRU-12 and iii) two null tones (e.g., null tone -312, 312 or null tone -313, 313 or null tone -446, 446 or null tone -447, 447 or null tone -65, 65 or null tone -66, 66 or null tone -199, 199 or null tone -200, 200 in method 2).
- 106 DRU-5: a combination of i) 52 DRU-5, ii) 52 DRU-13 and iii) two null tones (e.g., null tone -200, 312 or null tone -312, 200 or null tone -313, 199 or null tone -446, 66 or null tone -447, 65 or null tone -65, 447 or null tone -66, 446 or null tone -199, 313 in method 1); or a combination of i) 52 DRU-5, ii) 52 DRU-13, and iii) two null tones (e.g., null tone -200, 200 or null tone -312, 312 or null tone -313, 313 or null tone -446, 446 or null tone -447, 447 or null tone -65, 65 or null tone -66, 66 or null tone -199, 199 in method 2).
- 106 DRU-6: a combination of i) 52 DRU-6, ii) 52 DRU-14 and iii) two null tones (e.g., null tone -199, 313 or null tone -200, 312 or null tone -312, 200 or null tone -313, 199 or null tone -446, 66 or null tone -447, 65 or null tone -65, 447 or null tone -66, 446 in method 1); or a combination of i) 52 DRU-6, ii) 52 DRU-14, and iii) two null tones (e.g., null tone -199, 199 or null tone -200, 200 or null tone -312, 312 or null tone -313, 313 or null tone -446, 446 or null tone -447, 447 or null tone -65, 65 or null tone -66, 66 in method 2).
- 106 DRU-7: a combination of i) 52 DRU-7, ii) 52 DRU-15 and iii) two null tones (e.g., null tone -66, 446 or null tone -199, 313 or null tone -200, 312 or null tone -312, 200 or null tone -313, 199 or null tone -446, 66 or null tone -447, 65 or null tone -65, 447 in method 1); or a combination of i) 52 DRU-7, ii) 52 DRU-15 and iii) two null tones (e.g., null tone -66, 66 or null tone -199, 199 or null tone -200, 200 or null tone -312, 312 or null tone -313, 313 or null tone -446, 446 or null tone -447, 447 or null tone -65, 65 in method 2).
- 106 DRU-8: a combination of i) 52 DRU-8, ii) 52 DRU-16 and iii) two null tones (e.g., null tone -65, 447 or null tone -66, 446 or null tone -199, 313 or null tone -200, 312 or null tone -312, 200 or null tone -313, 199 or null tone -446, 66 or null tone -447, 65 in method 1); or a combination of i) 52 DRU-8, ii) 52 DRU-16 and iii) two null tones (e.g., null tone -65, 65 or null tone -66, 66 or null tone -199, 199 or null tone -200, 200 or null tone -312, 312 or null tone -313, 313 or null tone -446, 446 or null tone -447, 447 in method 2).

### D. 242 DRU index (i.e. 242 DRU tone plan)

242 DRU can be configured as a combination of two 106 DRUs and one 26 DRU (i.e., one of the 26 DRUs-5, 14, 23, 32 that is not used in the RU combination for generating 106 DRUs can be utilized) and four null tones, and can be defined as follows to distribute the tones as much as possible.
- 242 DRU-1: a combination of i) 106 DRU-1, ii) 106 DRU-5, iii) 26 DRU-5 and 4 null tones (e.g., null tone -500, -253, 12, 259 or null tone -259, -12, 253, 500 or null tone -366, -119, 146, 393 or null tone -393, -146, 119, 366 in method 1); or a combination of i) 106 DRU-1, ii) 106 DRU-5, iii) 26 DRU-5 and 4 null tones (e.g., null tone -500, -253, 253, 500 or null tone -259, -12, 12, 259 or null tone -366, -119, 119, 366 or null tone -393, -146, 146, 393 in method 2).
- 242 DRU-2: a combination of i) 106 DRU-2, ii) 106 DRU-6, iii) 26 DRU-14 and 4 null tones (e.g., null tone -393, -146, 119, 366 or null tone -500, -253, 12, 259 or null tone -259, -12, 253, 500 or null tone -366, -119, 146, 393 in method 1); or a combination of i) 106 DRU-2, ii) 106 DRU-6, iii) 26 DRU-14 and four null tones (e.g., null tones -393, -146, 146, 393 or null tones -500, -253, 253, 500 or null tones -259, -12, 12, 259 or null tones -366, -119, 119, 366 in method 2).
- 242 DRU-3: a combination of i) 106 DRU-3, ii) 106 DRU-7, iii) 26 DRU-23 and 4 null tones (e.g., null tone -366, -119, 146, 393 or null tone -393, -146, 119, 366 or null tone -500, -253, 12, 259 or null tone -259, -12, 253, 500 in method 1); or a combination of i) 106 DRU-3, ii) 106 DRU-7, iii) 26 DRU-23 and four null tones (e.g., null tones -366, -119, 119, 366 or null tones -393, -146, 146, 393 or null tones -500, -253, 253, 500 or null tones -259, - 12, 12, 259 in method 2).
- 242 DRU-4: a combination of i) 106 DRU-4, ii) 106 DRU-8, iii) 26 DRU-32 and 4 null tones (e.g., null tone -259, -12, 253, 500 or null tone -366, -119, 146, 393 or null tone -393, -146, 119, 366 or null tone -500, -253, 12, 259 in method 1); or a combination of i) 106 DRU-4, ii) 106 DRU-8, iii) 26 DRU-32 and four null tones (e.g., null tones -259, -12, 12, 259 or null tones -366, -119, 119, 366 or null tones -393, -146, 146, 393 or null tones -500, -253, 253, 500 in method 2).

### E. 484 DRU index (i.e. 484 DRU tone plan)

484 DRU can be configured as a combination of two 242 DRUs, and can be defined as follows to distribute the tones as much as possible.
- 484 DRU-1: Combination of 242 DRU-1 and 242 DRU-3
- 484 DRU-2: Combination of 242 DRU-2 and 242 DRU-4

If the DRU tone plan described above is applied, when transmitting DL OFDMA using DRU, the RU allocation field/subfield defined in the DL OFDMA transmission using RRU (e.g., see Table 8) can be used identically (i.e., without modification). In addition, when triggering TB PPDU using DRU, the RU allocation subfield defined in the trigger frame triggering TB PPDU transmission using RRU (e.g., see Table 1) can be used identically (i.e., without modification).

In this way, in order to use the existing defined RU allocation subfield/field as is without modification for RU allocation (i.e., indicating the size and arrangement of RU) for OFDAM transmission, additional mapping between DRUs and RRUs is required.

The present disclosure proposes a mapping/correspondence relationship between DRUs and RRUs as follows.

Here, it is assumed that RRUs are defined as RRU-1, -2, ... in order from the lowest frequency to the highest frequency (see Table 3 above). In this case, the allocation of a specific DRU to a specific STA can be indicated by a mapped/corresponded RRU (i.e., an RRU index) as defined below. Here, it can additionally be indicated that the DRU is applied to the corresponding PPDU (i.e., DL OFDMA PPDU, UL TB PPDU, etc.) (i.e., an indication that the RU allocation subfield/field is interpreted as an allocation of the DRU).

### Embodiment 1

In Embodiment 1, a mapping method between DRUs and RRUs is proposed according to one of the methods 1 and 2 described above.

### A. Index mapping/correspondence between 484 DRUs and 484 RRUs

Each 484 DRU can be mapped/corresponded to each 484 RRU in sequence as follows:
- 484 DRU-1: 484 RRU-1
- 484 DRU-2: 484 RRU-2

### B. Index mapping/correspondence between 242 DRU and 242 RRU

484 DRU/RRU can be combined as follows:
- 484 DRU-1 (484 RRU-1) = 242 DRU-1 + 242 DRU-3 (242 RRU-1 + 242 RRU-2)
- 484 DRU-2 (484 RRU-2) = 242 DRU-2 + 242 DRU-4 (242 RRU-3 + 242 RRU-4)

Therefore, each 242 DRU can be mapped/corresponded to each 242 RRU as follows.
- 242 DRU-1: 242 RRU-1
- 242 DRU-2: 242 RRU-3
- 242 DRU-3: 242 RRU-2
- 242 DRU-4: 242 RRU-4

### C. Index mapping/correspondence for 106 DRU / 26 DRU-5 / 26 DRU-14 / 26 DRU-23 / 26 DRU-32

242 DRU / RRU can be combined as follows:
- 242 DRU-1 (242 RRU-1) = 106 DRU-1 + 106 DRU-5 + 26 DRU-5 + null tones (106 RRU-1 + 106 RRU-2 + 26 RRU-5 + null tones)
- 242 DRU-2 (242 RRU-3) = 106 DRU-2 + 106 DRU-6 + 26 DRU-14 + null tones (106 RRU-5 + 106 RRU-6 + 26 RRU-23 + null tones)
- 242 DRU-3 (242 RRU-2) = 106 DRU-3 + 106 DRU-7 + 26 DRU-23 + null tones (106 RRU-3 + 106 RRU-4 + 26 RRU-14 + null tones)
- 242 DRU-4 (242 RRU-4) = 106 DRU-4 + 106 DRU-8 + 26 DRU-32 + null tones (106 RRU-7 + 106 RRU-8 + 26 RRU-32 + null tones)

Therefore, each of 106 DRU / 26 DRU-5 / 26 DRU-14 / 26 DRU-23 / 26 DRU-32 can be mapped/corresponded as follows.
- 106 DRU-1: 106 RRU-1
- 106 DRU-2: 106 RRU-5
- 106 DRU-3: 106 RRU-3
- 106 DRU-4: 106 RRU-7
- 106 DRU-5: 106 RRU-2
- 106 DRU-6: 106 RRU-6
- 106 DRU-7: 106 RRU-4
- 106 DRU-8: 106 RRU-8
- 26 DRU-5: 26 RRU-5
- 26 DRU-14: 26 RRU-23
- 26 DRU-23: 26 RRU-14
- 26 DRU-32: 26 RRU-32

### D. Index mapping/correspondence between 52 DRU and 52 RRU

106 DRU/RRU can be combined as follows.
- 106 DRU-1 (106 RRU-1) = 52 DRU-1 + 52 DRU-9 + null tones (52 RRU-1 + 52 RRU-2 + null tones)
- 106 DRU-2 (106 RRU-5) = 52 DRU-2 + 52 DRU-10 + null tones (52 RRU-9 + 52 RRU-10 + null tones)
- 106 DRU-3 (106 RRU-3) = 52 DRU-3 + 52 DRU-11 + null tones (52 RRU-5 + 52 RRU-6 + null tones)
- 106 DRU-4 (106 RRU-7) = 52 DRU-4 + 52 DRU-12 + null tones (52 RRU-13 + 52 RRU-14 + null tones)
- 106 DRU-5 (106 RRU-2) = 52 DRU-5 + 52 DRU-13 + null tones (52 RRU-3 + 52 RRU-4 + null tones)
- 106 DRU-6 (106 RRU-6) = 52 DRU-6 + 52 DRU-14 + null tones (52 RRU-11 + 52 RRU-12 + null tones)
- 106 DRU-7 (106 RRU-4) = 52 DRU-7 + 52 DRU-15 + null tones (52 RRU-7 + 52 RRU-8 + null tones)
- 106 DRU-8 (106 RRU-8) = 52 DRU-8 + 52 DRU-16 + null tones (52 RRU-15 + 52 RRU-16 + null tones)

Therefore, each of the 52 DRUs can be mapped/corresponded to each of the 52 RRUs as follows.
- 52 DRU-1: 52 RRU-1
- 52 DRU-2: 52 RRU-9
- 52 DRU-3: 52 RRU-5
- 52 DRU-4: 52 RRU-13
- 52 DRU-5: 52 RRU-3
- 52 DRU-6: 52 RRU-11
- 52 DRU-7: 52 RRU-7
- 52 DRU-8: 52 RRU-15
- 52 DRU-9: 52 RRU-2
- 52 DRU-10: 52 RRU-10
- 52 DRU-11: 52 RRU-6
- 52 DRU-12: 52 RRU-14
- 52 DRU-13: 52 RRU-4
- 52 DRU-14: 52 RRU-12
- 52 DRU-15: 52 RRU-8
- 52 DRU-16: 52 RRU-16

### E. Index mapping/correspondence between 26 DRU and 26 RRU

52 DRU/RRU can be combined as follows.
- 52 DRU-1 (52 RRU-1) = 26 DRU-1 + 26 DRU-19 (26 RRU-1 + 26 RRU-2)
- 52 DRU-2 (52 RRU-9) = 26 DRU-2 + 26 DRU-20 (26 RRU-19 + 26 RRU-20)
- 52 DRU-3 (52 RRU-5) = 26 DRU-3 + 26 DRU-21 (26 RRU-10 + 26 RRU-11)
- 52 DRU-4 (52 RRU-13) = 26 DRU-4 + 26 DRU-22 (26 RRU-28 + 26 RRU-29)
- 52 DRU-5 (52 RRU-3) = 26 DRU-6 + 26 DRU-24 (26 RRU-6 + 26 RRU-7)
- 52 DRU-6 (52 RRU-11) = 26 DRU-7 + 26 DRU-25 (26 RRU-24 + 26 RRU-25)
- 52 DRU-7 (52 RRU-7) = 26 DRU-8 + 26 DRU-26 (26 RRU-15 + 26 RRU-16)
- 52 DRU-8 (52 RRU-15) = 26 DRU-9 + 26 DRU-27 (26 RRU-33 + 26 RRU-34)
- 52 DRU-9 (52 RRU-2) = 26 DRU-10 + 26 DRU-28 (26 RRU-3 + 26 RRU-4)
- 52 DRU-10 (52 RRU-10) = 26 DRU-11 + 26 DRU-29 (26 RRU-21 + 26 RRU-22)
- 52 DRU-11 (52 RRU-6) = 26 DRU-12 + 26 DRU-30 (26 RRU-12 + 26 RRU-13)
- 52 DRU-12 (52 RRU-14) = 26 DRU-13 + 26 DRU-31 (26 RRU-30 + 26 RRU-31)
- 52 DRU-13 (52 RRU-4) = 26 DRU-15 + 26 DRU-33 (26 RRU-8 + 26 RRU-9)
- 52 DRU-14 (52 RRU-12) = 26 DRU-16 + 26 DRU-34 (26 RRU-26 + 26 RRU-27)
- 52 DRU-15 (52 RRU-8) = 26 DRU-17 + 26 DRU-35 (26 RRU-17 + 26 RRU-18)
- 52 DRU-16 (52 RRU-16) = 26 DRU-18 + 26 DRU-36 (26 RRU-35 + 26 RRU-36)

Therefore, each of the 26 DRUs can be mapped/corresponded to each RRU as follows.
- 26 DRU-1: 26 RRU-1
- 26 DRU-2: 26 RRU-19
- 26 DRU-3: 26 RRU-10
- 26 DRU-4: 26 RRU-28
- 26 DRU-5: 26 RRU-5
- 26 DRU-6: 26 RRU-6
- 26 DRU-7: 26 RRU-24
- 26 DRU-8: 26 RRU-15
- 26 DRU-9: 26 RRU-33
- 26 DRU-10: 26 RRU-3
- 26 DRU-11: 26 RRU-21
- 26 DRU-12: 26 RRU-12
- 26 DRU-13: 26 RRU-30
- 26 DRU-14: 26 RRU-23
- 26 DRU-15: 26 RRU-8
- 26 DRU-16: 26 RRU-26
- 26 DRU-17: 26 RRU-17
- 26 DRU-18: 26 RRU-35
- 26 DRU-19: 26 RRU-2
- 26 DRU-20: 26 RRU-20
- 26 DRU-21: 26 RRU-11
- 26 DRU-22: 26 RRU-29
- 26 DRU-23: 26 RRU-14
- 26 DRU-24: 26 RRU-7
- 26 DRU-25: 26 RRU-25
- 26 DRU-26: 26 RRU-16
- 26 DRU-27: 26 RRU-34
- 26 DRU-28: 26 RRU-4
- 26 DRU-29: 26 RRU-22
- 26 DRU-30: 26 RRU-13
- 26 DRU-31: 26 RRU-31
- 26 DRU-32: 26 RRU-32
- 26 DRU-33: 26 RRU-9
- 26 DRU-34: 26 RRU-27
- 26 DRU-35: 26 RRU-18
- 26 DRU-36: 26 RRU-36

### Embodiment 2

Unlike the mapping rule of the above Embodiment 1, the index of the DRU and the index of the RRU can be mapped identically, and in this case, the tone index of each DRU can be changed.

In order to be able to compare with the DRU defined according to either of the above methods 1 and 2, the newly defined DRU in Embodiment 2 (i.e., the DRU having the same DRU index as the RRU index in the mapping rule) is denoted as DRU*.

First, the mapping rule between the newly defined DRU* and the RRU can be defined as follows.
A. Index mapping/correspondence between 26 DRU* and 26 RRU
   - 26 DRU*-1: 26 RRU-1
   - 26 DRU*-2: 26 RRU-2
   - 26 DRU*-3: 26 RRU-3
   - 26 DRU*-4: 26 RRU-4
   - 26 DRU*-5: 26 RRU-5
   - 26 DRU*-6: 26 RRU-6
   - 26 DRU*-7: 26 RRU-7
   - 26 DRU*-8: 26 RRU-8
   - 26 DRU*-9: 26 RRU-9
   - 26 DRU*-10: 26 RRU-10
   - 26 DRU*-11: 26 RRU-11
   - 26 DRU*-12: 26 RRU-12
   - 26 DRU*-13: 26 RRU-13
   - 26 DRU*-14: 26 RRU-14
   - 26 DRU*-15: 26 RRU-15
   - 26 DRU*-16: 26 RRU-16
   - 26 DRU*-17: 26 RRU-17
   - 26 DRU*-18: 26 RRU-18
   - 26 DRU*-19: 26 RRU-19
   - 26 DRU*-20: 26 RRU-20
   - 26 DRU*-21: 26 RRU-21
   - 26 DRU*-22: 26 RRU-22
   - 26 DRU*-23: 26 RRU-23
   - 26 DRU*-24: 26 RRU-24
   - 26 DRU*-25: 26 RRU-25
   - 26 DRU*-26: 26 RRU-26
   - 26 DRU*-27: 26 RRU-27
   - 26 DRU*-28: 26 RRU-28
   - 26 DRU*-29: 26 RRU-29
   - 26 DRU*-30: 26 RRU-30
   - 26 DRU*-31: 26 RRU-31
   - 26 DRU*-32: 26 RRU-32
   - 26 DRU*-33: 26 RRU-33
   - 26 DRU*-34: 26 RRU-34
   - 26 DRU*-35: 26 RRU-35
   - 26 DRU*-36: 26 RRU-36
B. Index mapping/correspondence between 52 DRU* and 52 RRU
   - 52 DRU*-1: 52 RRU-1
   - 52 DRU*-2: 52 RRU-2
   - 52 DRU*-3: 52 RRU-3
   - 52 DRU*-4: 52 RRU-4
   - 52 DRU*-5: 52 RRU-5
   - 52 DRU*-6: 52 RRU-6
   - 52 DRU*-7: 52 RRU-7
   - 52 DRU*-8: 52 RRU-8
   - 52 DRU*-9: 52 RRU-1
   - 52 DRU*-10: 52 RRU-10
   - 52 DRU*-11: 52 RRU-11
   - 52 DRU*-12: 52 RRU-12
   - 52 DRU*-13: 52 RRU-13
   - 52 DRU*-14: 52 RRU-14
   - 52 DRU*-15: 52 RRU-15
   - 52 DRU*-16: 52 RRU-16
C. Index mapping/correspondence between 106 DRU* and 106 RRU
   - 106 DRU*-1: 106 RRU-1
   - 106 DRU*-2: 106 RRU-2
   - 106 DRU*-3: 106 RRU-3
   - 106 DRU*-4: 106 RRU-4
   - 106 DRU*-5: 106 RRU-5
   - 106 DRU*-6: 106 RRU-6
   - 106 DRU*-7: 106 RRU-7
   - 106 DRU*-8: 106 RRU-8
D. Index mapping/correspondence between 242 DRU* and 242 RRU
   - 242 DRU*-1: 242 RRU-1
   - 242 DRU*-2: 242 RRU-2
   - 242 DRU*-3: 242 RRU-3
   - 242 DRU*-4: 242 RRU-4
E. Index mapping/correspondence between 484 DRU* and 484 RRU
   - 484 DRU*-1: 484 RRU*-1
   - 484 DRU*-2: 484 RRU*-2

In this case, the tone index of the new DRU* can be defined as follows.
A. 26 DRU* tone index
   - 26 DRU*-1: 26 DRU-1
   - 26 DRU*-2: 26 DRU-19
   - 26 DRU*-3: 26 DRU-10
   - 26 DRU*-4: 26 DRU-28
   - 26 DRU*-5: 26 DRU-5
   - 26 DRU*-6: 26 DRU-6
   - 26 DRU*-7: 26 DRU-24
   - 26 DRU*-8: 26 DRU-15
   - 26 DRU*-9: 26 DRU-33
   - 26 DRU*-10: 26 DRU-3
   - 26 DRU*-11: 26 DRU-21
   - 26 DRU*-12: 26 DRU-12
   - 26 DRU*-13: 26 DRU-30
   - 26 DRU*-14: 26 DRU-23
   - 26 DRU*-15: 26 DRU-8
   - 26 DRU*-16: 26 DRU-26
   - 26 DRU*-17: 26 DRU-17
   - 26 DRU*-18: 26 DRU-35
   - 26 DRU*-19: 26 DRU-2
   - 26 DRU*-20: 26 DRU-20
   - 26 DRU*-21: 26 DRU-11
   - 26 DRU*-22: 26 DRU-29
   - 26 DRU*-23: 26 DRU-14
   - 26 DRU*-24: 26 DRU-7
   - 26 DRU*-25: 26 DRU-25
   - 26 DRU*-26: 26 DRU-16
   - 26 DRU*-27: 26 DRU-34
   - 26 DRU*-28: 26 DRU-4
   - 26 DRU*-29: 26 DRU-22
   - 26 DRU*-30: 26 DRU-13
   - 26 DRU*-31: 26 DRU-31
   - 26 DRU*-32: 26 DRU-32
   - 26 DRU*-33: 26 DRU-9
   - 26 DRU*-34: 26 DRU-27
   - 26 DRU*-35: 26 DRU-18
   - 26 DRU*-36: 26 DRU-36
B. 52 DRU* tone index
   - 52 DRU*-1: 52 DRU-1
   - 52 DRU*-2: 52 DRU-9
   - 52 DRU*-3: 52 DRU-5
   - 52 DRU*-4: 52 DRU-13
   - 52 DRU*-5: 52 DRU-3
   - 52 DRU*-6: 52 DRU-11
   - 52 DRU*-7: 52 DRU-7
   - 52 DRU*-8: 52 DRU-15
   - 52 DRU*-9: 52 DRU-2
   - 52 DRU*-10: 52 DRU-10
   - 52 DRU*-11: 52 DRU-6
   - 52 DRU*-12: 52 DRU-14
   - 52 DRU*-13: 52 DRU-4
   - 52 DRU*-14: 52 DRU-12
   - 52 DRU*-15: 52 DRU-8
   - 52 DRU*-16: 52 DRU-16
C. 106 DRU* tone index
   - 106 DRU*-1: 106 DRU-1
   - 106 DRU*-2: 106 DRU-5
   - 106 DRU*-3: 106 DRU-3
   - 106 DRU*-4: 106 DRU-7
   - 106 DRU*-5: 106 DRU-2
   - 106 DRU*-6: 106 DRU-6
   - 106 DRU*-7: 106 DRU-4
   - 106 DRU*-8: 106 DRU-8
D. 242 DRU* tone index
   - 242 DRU*-1: 242 DRU-1
   - 242 DRU*-2: 242 DRU-3
   - 242 DRU*-3: 242 DRU-2
   - 242 DRU*-4: 242 DRU-4
E. 484 DRU* tone index
   - 484 DRU*-1: 484 DRU*-1
   - 484 DRU*-2: 484 DRU*-2

Embodiment 3: The DRU index can be generalized as follows and mapped to each RRU.

First, each of the 26 DRU- a/b/c/d/e/t/g/h/i/j/k/l/m/n/o/p/q/r/s/t/u/v/w/x/y/z/aa/ab/ac/ad/ac/af/ag/ah/ai/aj can be defined as one of the 26 DRU-1 to 36 above. Here, the 26 DRU-1 to 18 may correspond to DRUs defined according to any one of the above-described methods 1 and 2. Alternatively, the definition of DRUs to which other tones are assigned may also be considered, not limited to the definition according to the above-described methods 1 and 2.

In addition, 52 DRU-a/b/c/d/e/f/g/h/i/j/k/l/m/n/o/p, 106 DRU-a/b/c/d/e/f/g/h, 242 DRU-a/b/c/d, 484 DRU-a/b can be defined, and the following combinations can be considered for this.

In this embodiment, the alphabet index order and the frequency order may not be related. In addition, even if the alphabet index between each DRU is the same, it does not mean that the order in each DRU is the same.
- 52 DRU-a: combination of 26 DRU-a and 26 DRU-s
- 52 DRU-b: combination of 26 DRU-b and 26 DRU-t
- 52 DRU-c: combination of 26 DRU-c and 26 DRU-u
- 52 DRU-d: combination of 26 DRU-d and 26 DRU-v
- 52 DRU-e: combination of 26 DRU-f and 26 DRU-x
- 52 DRU-f: combination of 26 DRU-g and 26 DRU-y
- 52 DRU-g: combination of 26 DRU-h and 26 DRU-z
- 52 DRU-h: combination of 26 DRU-i and 26 DRU-aa
- 52 DRU-i: combination of 26 DRU-j and 26 DRU-ab
- 52 DRU-j: combination of 26 DRU-k and 26 DRU-ac
- 52 DRU-k: combination of 26 DRU-1 and 26 DRU-ad
- 52 DRU-l: combination of 26 DRU-m and 26 DRU-ae
- 52 DRU-m: combination of 26 DRU-o and 26 DRU-ag
- 52 DRU-n: combination of 26 DRU-p and 26 DRU-ah
- 52 DRU-o: combination of 26 DRU-q and and 26 DRU-ai
- 52 DRU-p: combination of 26 DRU-r and 26 DRU-aj
- 106 DRU-a: combination of 52 DRU-a, 52 DRU-i and 2 null tones
- 106 DRU-b: combination of 52 DRU-b, 52 DRU-j and 2 null tones
- 106 DRU-c: combination of 52 DRU-c, 52 DRU-k and 2 null tones
- 106 DRU-d: combination of 52 DRU-d, 52 DRU-1 and 2 null tones
- 106 DRU-e: combination of 52 DRU-e, 52 DRU-m and 2 null tones
- 106 DRU-f: combination of 52 DRU-f, 52 DRU-n and 2 null tones
- 106 DRU-g: combination of 52 DRU-g, 52 DRU-o and 2 null tones
- 106 DRU-h: combination of 52 DRU-h, 52 DRU-p and 2 null tones
- 242 DRU-a: combination of 106 DRU-a, 106 DRU-e, 26 DRU-e and 4 null tones
- 242 DRU-b: combination of 106 DRU-b, 106 DRU-f, 26 DRU-n and 4 null tones
- 242 DRU-c: combination of 106 DRU-c, 106 DRU-g, 26 DRU-w and 4 null tones
- 242 DRU-d: combination of 106 DRU-d, 106 DRU-h, 26 DRU-af and 4 null tones
- 484 DRU-a: combination of 242 DRU-a and 242 DRU-c
- 484 DRU-b: combination of 242 DRU-b and 242 DRU-d

In this case, the following combinations and mappings can be considered:
A. Index mapping/correspondence between 484 DRU and 484 RRU
   - 484 DRU-a: 484 RRU-1
   - 484 DRU-b: 484 RRU-2
B. Index mapping/correspondence between 242 DRU and 242 RRU
   - 242 DRU-a: 242 RRU-1
   - 242 DRU-b: 242 RRU-3
   - 242 DRU-c: 242 RRU-2
   - 242 DRU-d: 242 RRU-4
C. Index mapping/correspondence between 106 DRU and 106 RRU
   - 106 DRU-a: 106 RRU-1
   - 106 DRU-b: 106 RRU-5
   - 106 DRU-c: 106 RRU-3
   - 106 DRU-d: 106 RRU-7
   - 106 DRU-e: 106 RRU-2
   - 106 DRU-f: 106 RRU-6
   - 106 DRU-g: 106 RRU-4
   - 106 DRU-h: 106 RRU-8
D. Index mapping/correspondence between 52 DRU and 52 RRU
   - 52 DRU-a: 52 RRU-1
   - 52 DRU-b: 52 RRU-9
   - 52 DRU-c: 52 RRU-5
   - 52 DRU-d: 52 RRU-13
   - 52 DRU-e: 52 RRU-3
   - 52 DRU-f: 52 RRU-11
   - 52 DRU-g: 52 RRU-7
   - 52 DRU-h: 52 RRU-15
   - 52 DRU-i: 52 RRU-2
   - 52 DRU-j: 52 RRU-10
   - 52 DRU-k: 52 RRU-6
   - 52 DRU-l: 52 RRU-14
   - 52 DRU-m: 52 RRU-4
   - 52 DRU-n: 52 RRU-12
   - 52 DRU-o: 52 RRU-8
   - 52 DRU-p: 52 RRU-16
E. Index mapping/correspondence between 26 DRU and 26 RRU
   - 26 DRU-a: 26 RRU-1
   - 26 DRU-b: 26 RRU-19
   - 26 DRU-c: 26 RRU-10
   - 26 DRU-d: 26 RRU-28
   - 26 DRU-e: 26 RRU-5
   - 26 DRU-f: 26 RRU-6
   - 26 DRU-g: 26 RRU-24
   - 26 DRU-h: 26 RRU-15
   - 26 DRU-i: 26 RRU-33
   - 26 DRU-j: 26 RRU-3
   - 26 DRU-k: 26 RRU-21
   - 26 DRU-l: 26 RRU-12
   - 26 DRU-m: 26 RRU-30
   - 26 DRU-n: 26 RRU-23
   - 26 DRU-o: 26 RRU-8
   - 26 DRU-p: 26 RRU-26
   - 26 DRU-q: 26 RRU-17
   - 26 DRU-r: 26 RRU-35
   - 26 DRU-s: 26 RRU-2
   - 26 DRU-t: 26 RRU-20
   - 26 DRU-u: 26 RRU-11
   - 26 DRU-v: 26 RRU-29
   - 26 DRU-w: 26 RRU-14
   - 26 DRU-x: 26 RRU-7
   - 26 DRU-y: 26 RRU-25
   - 26 DRU-z: 26 RRU-16
   - 26 DRU-aa: 26 RRU-34
   - 26 DRU-ab: 26 RRU-4
   - 26 DRU-ac: 26 RRU-22
   - 26 DRU-ad: 26 RRU-13
   - 26 DRU-ae: 26 RRU-31
   - 26 DRU-af: 26 RRU-32
   - 26 DRU-ag: 26 RRU-9
   - 26 DRU-ah: 26 RRU-27
   - 26 DRU-ai: 26 RRU-18
   - 26 DRU-aj: 26 RRU-36

Using the above DRU tone mapping can reduce signaling overhead when allocating DRUs to each STA, which may be desirable from an implementation perspective.

FIG. 13 illustrates an operation of a transmitting device for a PPDU transmission/reception method according to an embodiment of the present disclosure.

FIG. 13 illustrates the operation of a transmitting device based on the previously proposed methods. The example in FIG. 13 is provided for convenience of explanation and does not limit the scope of the present disclosure. Some of the step(s) illustrated in FIG. 13 may be omitted depending on the situation and/or setting.

Referring to FIG. 13, the transmitting device generates a PPDU to be transmitted within a 80 MHz frequency bandwidth (S1301).

Here, the transmitting device of the PPDU may be an AP or a non-AP STA, and the receiving device of the PPDU may be an AP or a non-AP STA. For convenience of the following description, the transmitting device may be referred to as a first STA, and the receiving device may be referred to as a second STA.

The transmitting device can obtain information about the tone plan proposed in the present disclosure. As described above, the information about the tone plan can include the size and location of the RU, control information related to the RU, information about the frequency band in which the RU is included, information about the STA receiving the RU, etc.

Then, the transmitting device can configure/generate a PPDU based on the acquired control information. The step of configuring/generating the PPDU can include the step of configuring/generating each field of the PPDU. That is, step S1301 includes the step of configuring one or more fields including control information about the tone plan. For example, step S1301 can include the step of configuring a field including control information indicating the size/location of the RU (e.g., N bitmap) and/or the step of configuring a field including an identifier (e.g., AID) of the STA receiving the RU.

In addition, step S1301 may include a step of generating an STF/LTF sequence to be transmitted through a specific RU. The STF/LTF sequence may be generated based on a preconfigured STF generation sequence/LTF generation sequence.

In addition, step S1301 may include a step of generating a data field (i.e., MPDU) to be transmitted through a specific RU.

According to an embodiment of the present disclosure, a plurality of first type RUs (i.e., DRUs) within an 80 MHz frequency bandwidth may comprise available subcarriers. Here, the available subcarriers may comprise subcarriers excluding one or more DC subcarriers, one or more guard subcarriers, and/or one or more null subcarriers, and the available subcarriers may vary depending on the size of the RU. For example, 26-subcarrier first type RUs, 52-subcarrier first type RUs, and/or 106-subcarrier first type RUs may comprise subcarriers excluding one or more DC subcarriers, one or more guard subcarriers, and one or more null subcarriers (see FIG. 11 and Table 11). As another example, the 242-subcarrier Type 1 RUs and/or the 484-subcarrier Type 1 RUs may comprise subcarriers excluding one or more DC subcarriers, one or more guard subcarriers and one or more null subcarriers (see FIG. 11 and Table 11). As another example, the 996-subcarrier Type 1 RUs may comprise subcarriers excluding one or more DC subcarriers and one or more guard subcarriers (see FIG. 11 and Table 11). In addition, each of the plurality of Type 1 RUs may be configured (or positioned) with discontiguous subcarriers at a predetermined interval (i.e., at a uniform interval) in the frequency domain (e.g., at 36 subcarrier intervals in the case of a 26-subcarrier RU). That is, the plurality of Type 1 RUs may be defined according to the above-described methods 1 and 2.

In addition, according to an embodiment of the present disclosure, a position of one or more first type RUs of the PPDU may be indicated by an RU allocation subfield in an ascending order of the plurality of first type RUs based on a lowest subcarrier of each of the plurality of first type RUs in the frequency domain. Here, the RU allocation subfield may be included in the PPDU or may be included in a trigger frame that triggers transmission of the PPDU.

In addition, each of the plurality of second type RUs (i.e., RRUs) may comprise contiguous subcarriers in the frequency domain, and the RU allocation subfield may be available for allocation of both the first type RU and the second type RU.

Here, information indicating whether the RU allocation subfield is used to indicate allocation of a first type RU or a second type RU may be included and transmitted in the PPDU or in a trigger frame for triggering the PPDU.

In addition, the first type RU and the second type RU can be used together within an 80MHz unit. That is, both the first type RU(s) and the second type RU(s) can be allocated within 80MHz.

Additionally, the plurality of first type RUs may include 26 subcarrier first type RUs, 52 subcarrier first type RUs, 106 subcarrier first type RUs, 242 subcarrier first type RUs and 484 subcarrier first type RUs, and the plurality of second type RUs may include 26 subcarrier second type RUs, 52 subcarrier second type RUs, 106 subcarrier second type RUs, 242 subcarrier second type RUs and 484 subcarrier second type RUs.

Here, each of the larger second type RUs in the frequency domain can be configured to include multiple smaller second type RUs. That is, the larger second type RU can be generated based on a combination of multiple smaller second type RUs (with optionally additional null subcarriers). Similarly, each of the larger first type RUs in the frequency domain can be configured to include multiple smaller first type RUs. That is, the larger first type RU can be generated based on a combination of multiple smaller first type RUs (with optionally additional null subcarriers).

In addition, according to Embodiment 1, the plurality of second type RUs may be indexed in ascending order for each size in the frequency domain, and the plurality of first type RUs may be indexed in ascending order of the lowest subcarrier of each of the plurality of first type RUs in the frequency domain by size. In this case, a mapping relationship between an index of the first type RU and an index of the second type RU may be determined such that the subcarriers of multiple smaller first type RUs included in a larger single first type RU are spaced as far apart as possible. In addition, in this case, values for the RU allocation subfield for allocation of the second type RU may be identically used for allocation of the first type RU. In addition, based on the mapping relationship between the index of the first type RU and the index of the second type RU, an index for the one or more first type RUs of the PPDU may be indicated by a value of the RU allocation subfield.

In addition, according to Embodiment 2, the plurality of second type RUs may be indexed in ascending order for each size in the frequency domain, and the plurality of first type RUs may be indexed such that an index of the first type RU is indicated in the same way as an index of the second type RU is indicated by a value for the RU allocation subfield. That is, the plurality of first type RUs may not be indexed in ascending order in the frequency domain. In this case, the subcarrier positions for the indices of each of the plurality of first type RUs may be determined such that the subcarrier spacings of multiple smaller first type RUs included in a larger single first type RU are spaced as far apart as possible.

In addition, according to Embodiment 3, the plurality of first type RUs may be indexed according to a predetermined rule. In this case, the values for the RU allocation subfield for allocation of the second type RU may be identically used for allocation of the first type RU. Based on a mapping relationship between an index of the first type RU and an index of the second type RU, an index for the one or more first type RUs of the PPDU may be indicated by the value of the RU allocation subfield.

The transmitting device (i.e., the first STA) transmits a PPDU to the receiving device (i.e., the second STA) within a 80 MHz frequency bandwidth (S1302).

Here, the transmitting device (i.e., the first STA) may perform at least one of operations, such as cyclic shift diversity (CSD), spatial mapping, inverse discrete fourier transform (IDFT)/inverse fast fourier transform (IFFT) operation, and guard interval (GI) insertion, for the S1302 operation.

The method described in the example of FIG. 13 may be performed by the first device (200) of FIG. 1. For example, one or more processors (202) of the first device (200) of FIG. 1 may be configured to generate a PPDU and transmit the PPDU via the transceiver(s) (106). Furthermore, one or more memories (204) of the first device (200) may store commands for performing the method described in the example of FIG. 13 or the examples described above when executed by one or more processors (202).

FIG. 14 illustrates an operation of a receiving device for a PPDU transmission/reception method according to an embodiment of the present disclosure.

FIG. 14 illustrates the operation of a receiving device based on the previously proposed methods. The example of FIG. 14 is for convenience of explanation and does not limit the scope of the present disclosure. Some of the step(s) illustrated in FIG. 14 may be omitted depending on the situation and/or setting.

Referring to FIG. 14, the receiving device receives a PPDU within a 80 MHz frequency bandwidth (S1401).

Here, the transmitting device of the PPDU may be an AP or a non-AP STA, and the receiving device of the PPDU may be an AP or a non-AP STA. For convenience of the following description, the transmitting device may be referred to as a first STA, and the receiving device may be referred to as a second STA.

Here, the receiving device (i.e., the second STA) may receive all or part of the PPDU through step S1401. Here, for the operation of step S1401, the receiving device (i.e., the second STA) may perform an operation of restoring the result of the CSD, Spatial Mapping, IDFT/IFFT operation, and GI insertion operation applied by the transmitting device (e.g., applied in step S1302 above).

The receiving device (i.e., the second STA) processes the PPDU (S1402).

Here, the receiving device (i.e., the second STA) can perform decoding for all/part of the PPDU. In addition, the receiving device (i.e., the second STA) can obtain control information related to the tone plan (i.e., RU) from the decoded PPDU.

More specifically, the receiving device can decode the x-SIG field of the PPDU based on the Legacy STF/LTF and obtain information included in the x-SIG field. For example, information about various tone plans (i.e., RUs) proposed in the present disclosure can be included in the x-SIG field, and the receiving STA can obtain information about the tone plan (i.e., RU) through the x-SIG field.

And, the receiving device (i.e., the second STA) can decode the remaining part of the PPDU based on the information about the acquired tone plan (i.e., RU). For example, the receiving device (i.e., the second STA) can decode the STF/LTF field of the PPDU based on the information about the tone plan (i.e., RU). In addition, the receiving device (i.e., the second STA) can decode the data field of the PPDU based on the information about the tone plan (i.e., RU) and obtain the MPDU included in the data field.

In addition, the receiving device (i.e., the second STA) can perform a processing operation to transfer the decoded data to a higher layer (e.g., a MAC layer). In addition, if the generation of a signal is instructed from the higher layer to the PHY layer in response to the data transferred to the higher layer, a subsequent operation can be performed.

According to an embodiment of the present disclosure, a plurality of first type RUs (i.e., DRUs) within an 80 MHz frequency bandwidth may comprise available subcarriers. Here, the available subcarriers may comprise subcarriers excluding one or more DC subcarriers, one or more guard subcarriers, and/or one or more null subcarriers, and the available subcarriers may vary depending on the size of the RU. For example, 26-subcarrier first type RUs, 52-subcarrier first type RUs, and/or 106-subcarrier first type RUs may comprise subcarriers excluding one or more DC subcarriers, one or more guard subcarriers, and one or more null subcarriers (see FIG. 11 and Table 11). As another example, the 242-subcarrier Type 1 RUs and/or the 484-subcarrier Type 1 RUs may comprise subcarriers excluding one or more DC subcarriers, one or more guard subcarriers and one or more null subcarriers (see FIG. 11 and Table 11). As another example, the 996-subcarrier Type 1 RUs may comprise subcarriers excluding one or more DC subcarriers and one or more guard subcarriers (see FIG. 11 and Table 11). In addition, each of the plurality of Type 1 RUs may be configured (or positioned) with discontiguous subcarriers at a predetermined interval (i.e., at a uniform interval) in the frequency domain (e.g., at 36 subcarrier intervals in the case of a 26-subcarrier RU). That is, the plurality of Type 1 RUs may be defined according to the above-described methods 1 and 2.

In addition, according to an embodiment of the present disclosure, a position of one or more first type RUs of the PPDU may be indicated by an RU allocation subfield in an ascending order of the plurality of first type RUs based on a lowest subcarrier of each of the plurality of first type RUs in the frequency domain. Here, the RU allocation subfield may be included in the PPDU or may be included in a trigger frame that triggers transmission of the PPDU.

In addition, each of the plurality of second type RUs (i.e., RRUs) may comprise contiguous subcarriers in the frequency domain, and the RU allocation subfield may be available for allocation of both the first type RU and the second type RU.

Here, information indicating whether the RU allocation subfield is used to indicate allocation of a first type RU or a second type RU may be included and transmitted in the PPDU or in a trigger frame for triggering the PPDU.

In addition, the first type RU and the second type RU can be used together within an 80MHz unit. That is, both the first type RU(s) and the second type RU(s) can be allocated within 80MHz.

Additionally, the plurality of first type RUs may include 26 subcarrier first type RUs, 52 subcarrier first type RUs, 106 subcarrier first type RUs, 242 subcarrier first type RUs and 484 subcarrier first type RUs, and the plurality of second type RUs may include 26 subcarrier second type RUs, 52 subcarrier second type RUs, 106 subcarrier second type RUs, 242 subcarrier second type RUs and 484 subcarrier second type RUs.

Here, each of the larger second type RUs in the frequency domain can be configured to include multiple smaller second type RUs. That is, the larger second type RU can be generated based on a combination of multiple smaller second type RUs (with optionally additional null subcarriers). Similarly, each of the larger first type RUs in the frequency domain can be configured to include multiple smaller first type RUs. That is, the larger first type RU can be generated based on a combination of multiple smaller first type RUs (with optionally additional null subcarriers).

In addition, according to Embodiment 1, the plurality of second type RUs may be indexed in ascending order for each size in the frequency domain, and the plurality of first type RUs may be indexed in ascending order of the lowest subcarrier of each of the plurality of first type RUs in the frequency domain by size. In this case, a mapping relationship between an index of the first type RU and an index of the second type RU may be determined such that the subcarriers of multiple smaller first type RUs included in a larger single first type RU are spaced as far apart as possible. In addition, in this case, values for the RU allocation subfield for allocation of the second type RU may be identically used for allocation of the first type RU. In addition, based on the mapping relationship between the index of the first type RU and the index of the second type RU, an index for the one or more first type RUs of the PPDU may be indicated by a value of the RU allocation subfield.

In addition, according to Embodiment 2, the plurality of second type RUs may be indexed in ascending order for each size in the frequency domain, and the plurality of first type RUs may be indexed such that an index of the first type RU is indicated in the same way as an index of the second type RU is indicated by a value for the RU allocation subfield. That is, the plurality of first type RUs may not be indexed in ascending order in the frequency domain. In this case, the subcarrier positions for the indices of each of the plurality of first type RUs may be determined such that the subcarrier spacings of multiple smaller first type RUs included in a larger single first type RU are spaced as far apart as possible.

In addition, according to Embodiment 3, the plurality of first type RUs may be indexed according to a predetermined rule. In this case, the values for the RU allocation subfield for allocation of the second type RU may be identically used for allocation of the first type RU. Based on a mapping relationship between an index of the first type RU and an index of the second type RU, an index for the one or more first type RUs of the PPDU may be indicated by the value of the RU allocation subfield.

The method described in the example of FIG. 14 may be performed by the second device (200) of FIG. 1. For example, one or more processors (202) of the second device (200) of FIG. 1 may be configured to receive a PPDU via the transceiver(s) (106) and process the PPDU. Furthermore, one or more memories (204) of the second device (200) may store commands for performing the method described in the example of FIG. 14 or the examples described above when executed by one or more processors (202).

In the conventional wireless LAN system, the RU (i.e., RRU) allocated to each STA for OFDMA transmission is composed only of contiguous subcarriers in the frequency domain. However, in contrast, an RU (i.e., DRU) comprising discontiguous subcarriers can be allocated for OFDMA transmission according to the examples of the present disclosure. Accordingly, by allocating an RU comprising discontiguous subcarriers, the transmission power can be improved, thereby achieving the effect of increasing wireless communication efficiency. In addition, the conventional RU allocation subfield can be equally used for DRU allocation. Accordingly, there is no need to define a new field for RU allocation and no additional signaling is required, so that signaling overhead can be reduced.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Availability]

A method proposed by the present disclosure is mainly described based on an example applied to an IEEE 802.11-based system, 5G system, but may be applied to various WLAN or wireless communication systems other than the IEEE 802.11-based system.

## Claims

1. A method performed by a first station (STA) in a wireless local area network (WLAN) system, the method comprising:
generating a PPDU (physical protocol data unit) to be transmitted within a 80MHz frequency bandwidth; and
transmitting the PPDU to a second STA,
wherein a plurality of first type resource units (RUs) within the 80MHz frequency bandwidth comprise subcarriers excluding one or more DC subcarriers, one or more guard subcarriers, and/or one or more null subcarriers,
wherein each of the plurality of first type RUs comprises discontiguous subcarriers at a predetermined interval in a frequency domain, and
wherein a location for one or more first type RUs of the PPDU is indicated by an RU allocation subfield in an ascending order of the plurality of first type RUs based on a lowest subcarrier of each of the plurality of first type RUs in a frequency domain.

2. The method of claim 1, wherein each of a plurality of second type RUs comprises contiguous subcarriers in a frequency domain, and
wherein the RU allocation subfield is available for allocation of both the first type RU and the second type RU.

3. The method of claim 2, wherein the plurality of first type RUs include 26 subcarrier first type RUs, 52 subcarrier first type RUs, 106 subcarrier first type RUs, 242 subcarrier first type RUs and 484 subcarrier first type RUs, and
wherein the plurality of second type RUs include 26 subcarrier second type RUs, 52 subcarrier second type RUs, 106 subcarrier second type RUs, 242 subcarrier second type RUs and 484 subcarrier second type RUs.

4. The method of claim 3, wherein each of larger first type RUs in a frequency domain is configured to include multiple different smaller first type RUs.

5. The method of claim 4, wherein values for the RU allocation subfield for allocation of the second type RU are used identically for allocation of the first type RU, and
indexes for the one or more first type RUs of the PPDU are indicated by a value of the RU allocation subfield based on mapping relationship between an index of the first type RU and an index of the second type RU.

6. The method of claim 5, wherein the mapping relationship between the index of the first type RU and the index of the second type RU is determined by the following 26 subcarrier RU mapping, the following 52 subcarrier RU mapping, the following 106 subcarrier RU mapping, the following 242 subcarrier RU mapping, the following 484 subcarrier RU mapping:
[26 subcarrier RU mapping]
First type RU - index 1: Second type RU - index 1,
First type RU - index 2: Second type RU - index 19,
First type RU - index 3: Second type RU - index 10,
First type RU - index 4: Second type RU - index 28,
First type RU - index 5: Second type RU - index 5,
First type RU - index 6: Second type RU - index 6,
First type RU - index 7: Second type RU - index 24,
First type RU - index 8: Second type RU - index 15,
First type RU - index 9: Second type RU - index 33,
First type RU - index 10: Second type RU - index 3,
First type RU - index 11: Second type RU - index 21,
First type RU - index 12: Second type RU - index 12,
First type RU - index 13: Second type RU - index 30,
First type RU - index 14: Second type RU - index 23,
First type RU - index 15: Second type RU - index 8,
First type RU - index 16: Second type RU - index 26,
First type RU - index 17: Second type RU - index 17,
First type RU - index 18: Second type RU - index 35,
First type RU - index 19: Second type RU - index 2,
First type RU - index 20: Second type RU - index 20,
First type RU - index 21: Second type RU - index 11,
First type RU - index 22: Second type RU - index 29,
First type RU - index 23: Second type RU - index 14,
First type RU - index 24: Second type RU - index 7,
First type RU - index 25: Second type RU - index 25,
First type RU - index 26: Second type RU - index 16,
First type RU - index 27: Second type RU - index 34,
First type RU - index 28: Second type RU - index 4,
First type RU - index 29: Second type RU - index 22,
First type RU - index 30: Second type RU - index 13,
First type RU - index 31: Second type RU - index 31,
First type RU - index 32: Second type RU - index 32,
First type RU - index 33: Second type RU - index 9,
First type RU - index 34: Second type RU - index 27,
First type RU - index 35: Second type RU - index 18,
First type RU - index 36: Second type RU - index 36;
[52 subcarrier RU mapping]
First type RU - index 1: Second type RU - index 1,
First type RU - index 2: Second type RU - index 9,
First type RU - index 3: Second type RU - index 5,
First type RU - index 4: Second type RU - index 13,
First type RU - index 5: Second type RU - index 3,
First type RU - index 6: Second type RU - index 11,
First type RU - index 7: Second type RU - index 7,
First type RU - index 8: Second type RU - index 15,
First type RU - index 9: Second type RU - index 2,
First type RU - index 10: Second type RU - index 10,
First type RU - index 11: Second type RU - index 6,
First type RU - index 12: Second type RU - index 14,
First type RU - index 13: Second type RU - index 4,
First type RU - index 14: Second type RU - index 12,
First type RU - index 15: Second type RU - index 8,
First type RU - index 16: Second type RU - index 16;
[106 subcarrier RU mapping]
First type RU - index 1: Second type RU - index 1,
First type RU - index 2: Second type RU - index 5,
First type RU - index 3: Second type RU - index 3,
First type RU - index 4: Second type RU - index 7;
First type RU - index 5: Second type RU - index 2,
First type RU - index 6: Second type RU - index 6,
First type RU - index 7: Second type RU - index 4,
First type RU - index 8: Second type RU - index 8;
[242 subcarrier RU mapping]
First type RU - index 1: Second type RU - index 1,
First type RU - index 2: Second type RU - index 3,
First type RU - index 3: Second type RU - index 2,
First type RU - index 4: Second type RU - index 4;
[484 subcarrier RU mapping]
First type RU - index 1: Second type RU - index 1,
First type RU - index 2: Second type RU - index 2;
wherein : means mapping.

7. The method of claim 5, wherein the plurality of second type RUs are indexed in ascending order for each size in a frequency domain,
wherein the plurality of first type RUs are indexed in ascending order of a lowest subcarrier of each of the plurality of first type RUs for each size in the frequency domain, and
wherein the mapping relationship between the index of the first type RU and the index of the second type RU is determined such that spacing of subcarriers of multiple different smaller first type RUs included in a larger single first type RU are spaced as far apart as possible.

8. The method of claim 5, wherein the mapping relationship between the index of the first type RU and the index of the second type RU is determined by the following 26 subcarrier RU mapping, the following 52 subcarrier RU mapping, the following 106 subcarrier RU mapping, the following 242 subcarrier RU mapping, the following 484 subcarrier RU mapping:
[26 subcarrier RU mapping]
First type RU - index 1: Second type RU - index 1,
First type RU - index 2: Second type RU - index 2,
First type RU - index 3: Second type RU - index 3,
First type RU - index 4: Second type RU - index 4,
First type RU - index 5: Second type RU - index 5,
First type RU - index 6: Second type RU - index 6,
First type RU - index 7: Second type RU - index 7,
First type RU - index 8: Second type RU - index 8,
First type RU - index 9: Second type RU - index 9,
First type RU - index 10: Second type RU - index 10,
First type RU - index 11: Second type RU - index 11,
First type RU - index 12: Second type RU - index 12,
First type RU - index 13: Second type RU - index 13,
First type RU - index 14: Second type RU - index 14,
First type RU - index 15: Second type RU - index 15,
First type RU - index 16: Second type RU - index 16,
First type RU - index 17: Second type RU - index 17,
First type RU - index 18: Second type RU - index 18,
First type RU - index 19: Second type RU - index 19,
First type RU - index 20: Second type RU - index 20,
First type RU - index 21: Second type RU - index 21,
First type RU - index 22: Second type RU - index 22,
First type RU - index 23: Second type RU - index 23,
First type RU - index 24: Second type RU - index 24,
First type RU - index 25: Second type RU - index 25,
First type RU - index 26: Second type RU - index 26,
First type RU - index 27: Second type RU - index 27,
First type RU - index 28: Second type RU - index 28,
First type RU - index 29: Second type RU - index 29,
First type RU - index 30: Second type RU - index 30,
First type RU - index 31: Second type RU - index 31,
First type RU - index 32: Second type RU - index 32,
First type RU - index 33: Second type RU - index 33,
First type RU - index 34: Second type RU - index 34,
First type RU - index 35: Second type RU - index 35,
First type RU - index 36: Second type RU - index 36;
[52 subcarrier RU mapping]
First type RU - index 1: Second type RU - index 1,
First type RU - index 2: Second type RU - index 2,
First type RU - index 3: Second type RU - index 3,
First type RU - index 4: Second type RU - index 4,
First type RU - index 5: Second type RU - index 5,
First type RU - index 6: Second type RU - index 6,
First type RU - index 7: Second type RU - index 7,
First type RU - index 8: Second type RU - index 8,
First type RU - index 9: Second type RU - index 9,
First type RU - index 10: Second type RU - index 10,
First type RU - index 11: Second type RU - index 11,
First type RU - index 12: Second type RU - Index 12,
First type RU - index 13: Second type RU - index 13,
First type RU - index 14: Second type RU - index 14,
First type RU - index 15: Second type RU - index 15,
First type RU - index 16: Second type RU - index 16;
[106 subcarrier RU mapping]
First type RU - index 1: Second type RU - index 1,
First type RU - index 2: Second type RU - index 2,
First type RU - index 3: Second type RU - index 3,
First type RU - index 4: Second type RU - index 4,
First type RU - index 5: Second type RU - index 5,
First type RU - index 6: Second type RU - index 6,
First type RU - index 7: Second type RU - index 7,
First type RU - index 8: Second type RU - index 8;
[242 subcarrier RU mapping]
First type RU - index 1: Second type RU - index 1,
First type RU - index 2: Second type RU - index 2,
First type RU - index 3: Second type RU - index 3,
First type RU - index 4: Second type RU - index 4;
[484 subcarrier RU mapping]
First type RU - index 1: Second type RU - index 1,
First type RU - index 2: Second type RU - index 2;
wherein : means mapping, method.

9. The method of claim 5, wherein the plurality of second type RUs are indexed in ascending order for each size in a frequency domain,
wherein the plurality of first type RUs are indexed so that the index of the first type RU is indicated identically as the index of the second type RU is indicated by a value of the RU allocation subfield, and
wherein subcarrier locations for each index of the plurality of first type RUs are determined such that spacing of subcarriers of multiple different smaller first type RUs included in a larger single first type RU are spaced as far apart as possible.

10. The method of claim 1, wherein the RU allocation subfield is included in the PPDU or included in a trigger frame that triggers transmission of the PPDU.

11. A first station (STA) device in a wireless local area network (WLAN) system, the device comprising:
at least one transceiver; and
at least one processor connected to the at least one transceiver,
wherein the at least one processor configured to:
generate a PPDU (physical protocol data unit) to be transmitted within a 80MHz frequency bandwidth; and
transmit the PPDU to a second STA,
wherein a plurality of first type resource units (RUs) within the 80MHz frequency bandwidth comprise subcarriers excluding one or more DC subcarriers, one or more guard subcarriers, and/or one or more null subcarriers,
wherein each of the plurality of first type RUs comprises discontiguous subcarriers at a predetermined interval in a frequency domain, and
wherein a location for one or more first type RUs of the PPDU is indicated by an RU allocation subfield in an ascending order of the plurality of first type RUs based on a lowest subcarrier of each of the plurality of first type RUs in a frequency domain.

12. A method performed by a second station (STA) in a wireless local area network (WLAN) system, the method comprising:
receiving a PPDU (physical protocol data unit) within a 80MHz frequency bandwidth; and
processing the PPDU,
wherein a plurality of first type resource units (RUs) within the 80MHz frequency bandwidth comprise subcarriers excluding one or more DC subcarriers, one or more guard subcarriers, and/or one or more null subcarriers,
wherein each of the plurality of first type RUs comprises discontiguous subcarriers at a predetermined interval in a frequency domain, and
wherein a location for one or more first type RUs of the PPDU is indicated by an RU allocation subfield in an ascending order of the plurality of first type RUs based on a lowest subcarrier of each of the plurality of first type RUs in a frequency domain.

13. A second station (STA) device in a wireless local area network (WLAN) system, the device comprising:
at least one transceiver; and
at least one processor connected to the at least one transceiver,
wherein the at least one processor configured to:
receive a PPDU (physical protocol data unit) within a 80MHz frequency bandwidth; and
process the PPDU,
wherein a plurality of first type resource units (RUs) within the 80MHz frequency bandwidth comprise subcarriers excluding one or more DC subcarriers, one or more guard subcarriers, and/or one or more null subcarriers,
wherein each of the plurality of first type RUs comprises discontiguous subcarriers at a predetermined interval in a frequency domain, and
wherein a location for one or more first type RUs of the PPDU is indicated by an RU allocation subfield in an ascending order of the plurality of first type RUs based on a lowest subcarrier of each of the plurality of first type RUs in a frequency domain.

14. A processing device configured to control a station (STA) in a wireless local area network (WLAN) system, the processing device comprising:
at least one processor; and
at least one computer memory operably connected to the at least one processor, and based on being executed by the at least one processor, storing instructions for performing a method according to any one claim of claim 1 to claim 10.

15. At least one non-transitory computer-readable medium storing at least one instruction, wherein:
the at least one instruction controls a device to perform a method according to any one claim of claim 1 to claim 10 in a wireless local area network (WLAN) system by being executed by at least one processor.
